# EUROPEAN PATENT APPLICATION

(11) **EP 2 615 523 A1**
(43) Date of publication of application: **17.07.2013**
(21) Application number: 11823172.9
(22) Date of filing: 11.04.2011
(51) Int. Cl.: G06F 3/01, A63F 13/00, G06T 19/00

(54) **IMAGE RECOGNITION APPARATUS, OPERATION EVALUATION METHOD, AND PROGRAM**

(30) Priority: 06.09.2010 JP 2010199368
(71) Applicant: Shimane Prefectural Government, Matsue-shi Shimane 690-8501 (JP)
(72) Inventor: IZUMI, Kenji, Matsue-shi Shimane 690-0816 (JP)
(74) Representative: Hirsch & Associés
(86) International application number: PCT/JP2011/002136
(87) International publication number: WO 2012/032687

(57) **Abstract**

An object is to enable an accurate determination of an operation. An operator (102) uses a relative relation between a virtual operation screen determined from an image or a position of an operator photographed by the aforementioned video camera (201) and the operator (102) to determine that the operation starts when a part of the operator (102) comes on this side of the operation screen as viewed from the video camera (201), and from a configuration or a movement of each portion, it is determined which out of operations in advance estimated the configuration or the movement corresponds to.

## Description

### Technical Field

The present invention relates to an image recognition apparatus and an operation determining method, and in more detail, to an image recognition apparatus and an operation determining method for determining a movement of a measurement target from an image photographed by a video camera or the like.

### Background Art

In recent years there are proposed various devices and processes as interfaces between computers or electronic devices and human beings, that is, machine interfaces, and particularly in a game machine or an operation guide device, there is proposed a technology in which an entirety or a part of an operator is photographed by a camera and an intention of the operator is determined in accordance with the photographed image to operate the game machine or the operation guide device. For example, Patent Literature 1 proposes a technology in which there are provided a host computer for recognizing a configuration and a movement of an object in an image photographed by a CCD camera and a display device for displaying the configuration and the movement of the object recognized by the host computer, wherein, when a user faces the CCD camera and gives an instruction by hand waving, the given hand waving is displayed on a display screen of the display device, a virtual switch and the like displayed on the display screen can be selected with an icon of an arrow mark cursor by the hand waving, and a very simple operation of the device is possible without necessity of an input device such as a mouse.

In recent years, there is further proposed an input system in which a movement or a configuration of a hand-finger is recognized as some kind of gesture from an image in which the movement or the configuration is photographed, thereby perform an operation input. For example, in the presentation by a screen operation by a gesture or in an input device which can be used in a non-contact kiosk terminal not requiring a touch panel, an operator facing a large screen performs various operations toward a camera usually installed in a position of a screen lower part, the content is mirrored on the large screen. The configuration and the movement of the operator are extracted from the image photographed in this manner by a method known in the present technology field, which are compared with, for example, a pattern predetermined and stored in a data base. Thereby the meaning of the configuration or the movement of the operator is determined, that is, it is determined what operation the operator intends to perform by the movement, which is used for control of the device.

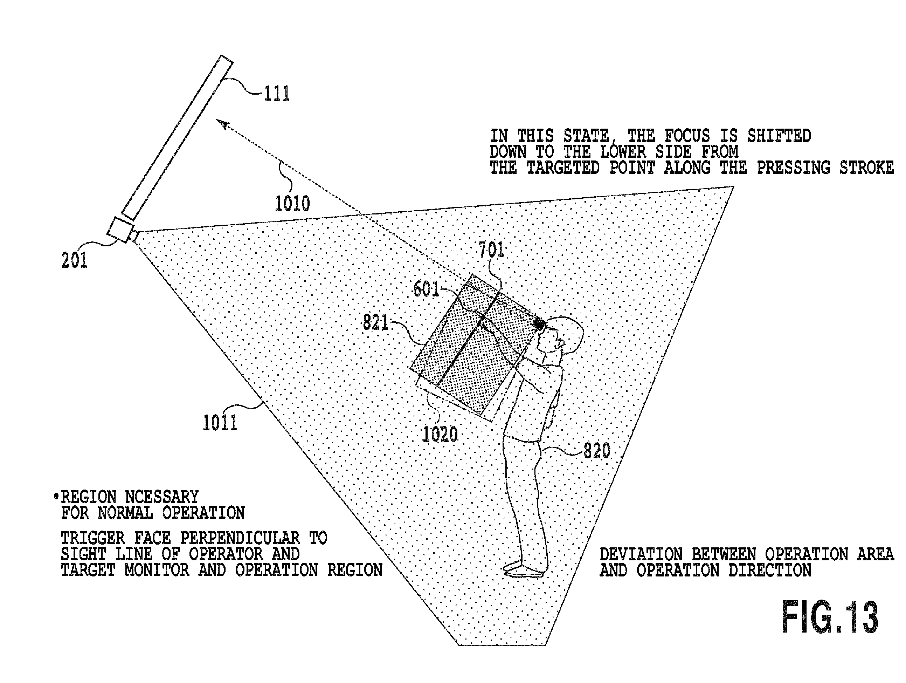

On the other hand, a technology of reading an image of an operator, as shown in Fig. 13, makes it possible to photograph an operator with a camera adapted for a three-dimensional or stereoscopic photography to reproduce a stereoscopic image, which is used in an application for security check or the like. By reproducing the stereoscopic image, the movement of the operator can be figured out stereoscopically, for example, the movement of the operator, particularly the movement of a hand of the operator can be recognized also in the forward and backward directions. Therefore, a variety of gestures increase as compared to a technology using a two-dimensional image. In addition, even if a plurality of operators are extracted as images, in a case of many people, the forward and backward relation between the operators can be comprehended because of the stereoscopic image. Therefore, only the movement of the headmost operator can be extracted to be used for input of an operation.

Further, in recent years there are proposed various types of display devices capable of performing a three-dimensional (3D) or stereoscopic display, and an application field of such a display device has been spreading not only to a limited field such as a conventional movie theater but also to fields from a display device in an event site to a household television. In regard to 3D display technologies also, various types of technologies are proposed, which include technologies of not only a color display, but also a process in which a color taste is not spoiled and a process in which exclusive glasses are unnecessary (for example, refer to Patent Literature 2).

### Citation List

### Patent Literature

PTL 1: Japanese Patent Laid-Open No. 2004-78977
PTL 2: Japanese Patent Laid-Open No. 2005-266116

### Summary of Invention

### Technical Problem

However, in the conventional gesture operation, any standardized gesture such as a de facto standard is not established and a user can not intuitively recognize what can be done with what movement except for a pointing operation of XY ordinates by a forefinger. There are some cases where an instruction is made by fixing a click operation such as "click", "double clicks" or "drag" to the ordinate during a waiting time of a couple of seconds, but there are not a few cases where a comfortable operation is hampered by the event that the set waiting time is too long. Therefore, there is a problem that there does not exist a practical technique of making the operation such as "click" or "determination" (double clicks or the like) comprehensible and comfortable.

The conventional gesture detecting apparatus is different from an input apparatus such as a touch panel which an operator can touch directly and is difficult to figure out a clear intention of the operator. That is, even if the operator performs some movement, there occurs a problem that it is not easy to determine whether the movement expresses an intention of input or occurs simply as the result of the operator's habit. As a result, there occurs a problem that a simple gesture can not be recognized unless it is performed in an unnaturally distinct manner, it is necessary to work out a prior arrangement of the gesture or complicate gestures can not be used.

The present invention is made in view of the foregoing problem and an object of the present invention is to provide an image recognition apparatus and an operation determining method for enabling an accurate determination of an operation by performing a movement of an operator to an apparatus based upon the operator's recognition of a state where the operation relating to some input is being performed. As a result, the operator does not need to be familiar with the operation of the apparatus or learn particular gestures, and by moving an entirety or a part of the body, it is possible to determine the movement as an operation expressing accurately an intention of the operator.

### Solution to Problem

In order to achieve the above object, the invention according to claim 1 is provided with an image recognition apparatus comprising three-dimensional photography means for reading an image of an operator to produce stereoscopic image data, operation screen forming means for forming a virtual operation screen in a configuration and a position based upon the image and the position of the operator read by the three-dimensional photography means, operation determining means for, by reading a movement of an image of at least a part of the operator to the formed virtual operation screen by the three-dimensional photography means, determining whether or not the movement is an operation based upon a position relation between the part of the operator and the virtual operation screen, and signal output means for outputting a predetermined signal when it is determined that the movement is the operation.

The invention according to claim 2 is characterized in that in an image recognition apparatus according to claim 1, in a case where the three-dimensional photography means reads a plurality of operation candidates, it is determined that an operation candidate performing a predetermined particular movement is the operator.

The invention according to claim 3 is characterized in that in an image recognition apparatus according to claim 1 or 2, there is further provided operator display means for displaying a position relation of the operation candidate determined as the operator to the present operator and the other candidate shown in the image of the plurality of the candidates read by the three-dimensional photography means.

The invention according to claim 4 is characterized in that in an image recognition apparatus according to any of claims 1 to 3, there is further provided a position determining face arranged in a predetermined position in a side of the operator of the virtual operation screen for determining an operation position on the virtual operation screen, wherein the operation determining means, at the time of crossing the virtual operation screen in a series of movements in which a part of the operator moves from the position determining face to the virtual operation screen, determines an operation of the operator as a movement that the part of the operator crosses a position on the virtual operation screen corresponding to a position on the position determining face which the part of the operator crosses.

The invention according to claim 5 is characterized in that in an image recognition apparatus according to any of claims 1 to 4, positions of an arm and a face of the operator are extracted from the read image of the operator, wherein the configuration and the position of the virtual operation screen are determined based upon the extracted positions of the arm and the face.

The invention according to claim 6 is characterized in that in an image recognition apparatus according to any of claims 1 to 5, the position of the virtual operation screen is between the operator and the three-dimensional photography means.

The invention according to claim 7 is characterized in that in an image recognition apparatus according to any of claims 1 to 6, the operation screen forming means forms the virtual operation screen in a configuration and a position defined based upon the image of the operator and a predetermined particular movement of the operator which are read by the three-dimensional photography means.

The invention according to claim 8 is characterized in that in an image recognition apparatus according to any of claims 1 to 7, the operation screen forming means forms the virtual operation screen at an angle defined based upon the image of the operator and a predetermined particular movement of the operator which are read by the three-dimensional photography means.

The invention according to claim 9 is characterized in that in an image recognition apparatus according to any of claims 1 to 8, the operation screen forming means forms the virtual operation screen at an angle defined based upon the image and the position of the operator read by the three-dimensional photography means.

The invention according to claim 10 is characterized in that in an image recognition apparatus according to any of claims 1 to 9, there is further provided operation screen stereoscopic display means for displaying a stereoscopic image showing the formed virtual operation screen.

The invention according to claim 11 is characterized in that in an image recognition apparatus according to claim 10, the stereoscopic image is formed by a binocular parallax.

The invention according to claim 12 is characterized in that in an image recognition apparatus according to claim 10 or 11, a distance between the part of the operator and the virtual operation screen is calculated from a position relation therebetween to stereoscopically display a predetermined index showing the position relation of the part of the operator to the virtual operation screen at a position corresponding to the distance.

The invention according to claim 13 is provided with an image recognition apparatus comprising three-dimensional photography means for reading an image of an operator to produce stereoscopic image data, operation screen forming means for forming a virtual operation screen in a configuration and a position based upon a predetermined particular movement of the operator read by the three-dimensional photography means, operation determining means for, by reading a movement of an image of at least a part of the operator to the formed virtual operation screen by the three-dimensional photography means, determining whether or not the movement is an operation based upon a position relation between the part of the operator and the virtual operation screen, and signal output means for outputting a predetermined signal when it is determined that the movement is the operation.

The invention according to claim 14 is provided with an operation determining method comprising a three-dimensional photography step for reading an image of an operator to produce stereoscopic image data, an operation screen forming step for forming a virtual operation screen in a configuration and a position based upon the image and the position of the operator read by the three-dimensional photography step, an operation determining step for, by reading a movement of an image of at least a part of the operator to the formed virtual operation screen by the three-dimensional photography step, determining whether or not the movement is an operation based upon a position relation between the part of the operator and the virtual operation screen, and a signal output step for outputting a predetermined signal when it is determined that the movement is the operation.

The invention according to claim 15 is characterized in that in an operation determining method according to claim 14, the operation determining step, at the time of crossing the virtual operation screen in a series of movements in which a part of the operator moves from a position determining face arranged in a predetermined position in a side of the operator of the virtual operation screen for determining an operation position on the virtual operation screen to the virtual operation screen, determines an operation of the operator as a movement that the part of the operator crosses a position on the virtual operation screen corresponding to a position on the position determining face which the part of the operator crosses.

The invention according to claim 16 is characterized in that in an operation determining method according to claim 14 or 15, there is further provided an operation screen stereoscopic display step for displaying a stereoscopic image showing the formed virtual operation screen.

The invention according to claim 17 is provided with a program for executing an operation determining method for recognizing an image of an operator to determine an operation content by an image recognition apparatus, the operation determining method comprising a three-dimensional photography step for reading an image of an operator to produce stereoscopic image data, an operation screen forming step for forming a virtual operation screen in a configuration and a position based upon the image and the position of the operator read by the three-dimensional photography step, an operation determining step for, by reading a movement of an image of at least a part of the operator to the formed virtual operation screen by the three-dimensional photography step, determining whether or not the movement is an operation based upon a position relation between the part of the operator and the virtual operation screen, and a signal output step for outputting a predetermined signal when it is determined that the movement is the operation.

The invention according to claim 18 is characterized in that in a program according to claim 17, the operation determining step, at the time of crossing the virtual operation screen in a series of movements in which a part of the operator moves from a position determining face arranged in a predetermined position in a side of the operator of the virtual operation screen for determining an operation position on the virtual operation screen to the virtual operation screen, determines an operation of the operator as a movement that the part of the operator crosses a position on the virtual operation screen corresponding to a position on the position determining face which the part of the operator crosses.

The invention according to claim 19 is characterized in that in a program according to claim 17 or 18, there is further provided an operation screen stereoscopic display step for displaying a stereoscopic image showing the formed virtual operation screen.

### Advantageous Effects of Invention

As explained above, an image recognition apparatus according to the present invention comprises three-dimensional photography means for reading an image of an operator to produce stereoscopic image data, operation screen forming means for forming a virtual operation screen in a configuration and a position based upon the image and the position of the operator read by the three-dimensional photography means, operation determining means for, by reading a movement of an image of at least a part of the operator to the formed virtual operation screen by the three-dimensional photography means, determining whether or not the movement is an operation based upon a position relation between the part of the operator and the virtual operation screen, and signal output means for outputting a predetermined signal when it is determined that the movement is the operation. Therefore, the operator does not need to be familiar with the operation of the apparatus or learn particular gestures, and by moving an entirety or a part of the body, it is possible to determine the movement as an operation accurately expressing an intention of the operator.

### Brief Description of Drawings

[Fig. 1] Fig. 1 is a diagram showing an example of an operation input system according to the present embodiment;
[Fig. 2] Fig. 2 is a block diagram schematically showing a relation between the operation input system according to the present embodiment and a computer;
[Fig. 3] Fig. 3 is a block diagram showing an example of a function module of a program processed in a CPU of the computer according to the present embodiment;
[Fig. 4] Fig. 4 is a flow chart of the process according to the present embodiment;
[Fig. 5] Fig. 5 is a diagram explaining a virtual operation screen stereoscopically displayed according to an embodiment in the present invention;
[Fig. 6] Fig. 6 is a diagram showing a state of a virtual operation screen according to an embodiment in the present invention;
[Fig. 7] Fig. 7 is a diagram showing a state of a virtual operation screen in a television display apparatus as a use example of an embodiment in the present invention;
[Fig. 8] Fig. 8 is a diagram showing a position of the virtual operation screen in the television display apparatus as a use example of an embodiment in the present invention;
[Fig. 9] Fig. 9 is a diagram showing a state of a virtual operation screen formed by an operation screen forming reference according to an embodiment in the present invention;
[Fig. 10] Fig. 10 is a diagram showing an example of an image in a case of taking in the image by a plurality of operators using the conventional three-dimensional camera;
[Fig. 11] Fig. 11 is a diagram showing an example of setting an operation region of operation input support according to an embodiment in the present invention;
[Fig. 12] Fig. 12 is a diagram showing an example of adjusting an operation region by a position of a screen or a camera according to an embodiment in the present invention;
[Fig. 13] Fig. 13 is a diagram showing a different example of adjusting an operation region by a position of a screen or a camera according to an embodiment in the present invention;
[Fig. 14] Fig. 14 is a diagram showing a different example of adjusting an operation region by a screen or a position of a camera according to an embodiment in the present invention;
[Fig. 15] Fig. 15 is a diagram explaining a method for adjusting an operation region by a position of a screen or a camera according to an embodiment in the present invention;

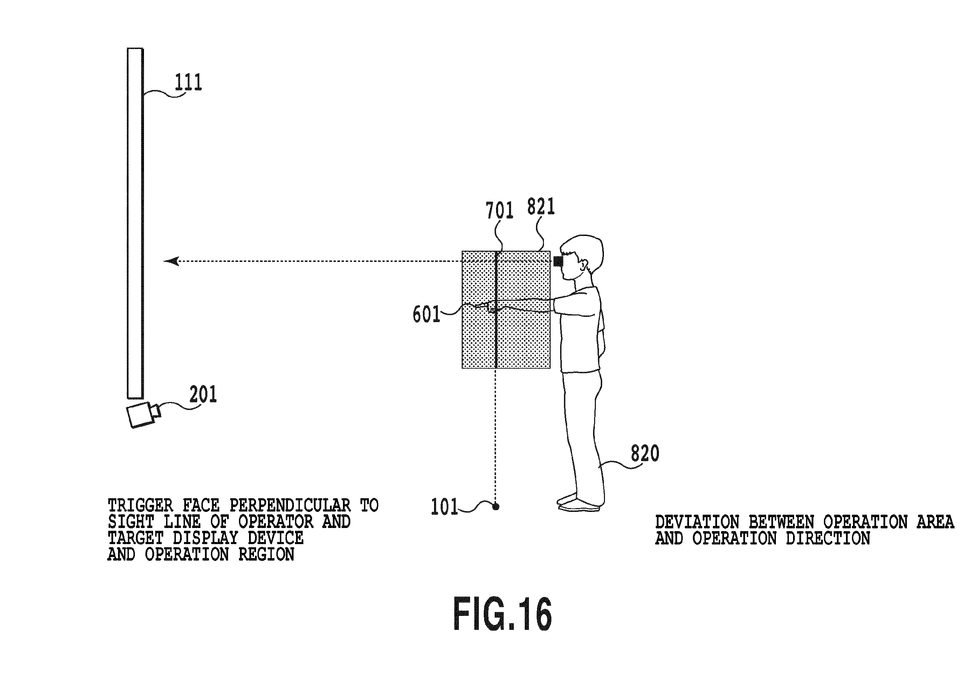

[Fig. 16] Fig. 16 is a diagram showing an example of adjusting an operation region by a position of a screen or a camera according to an embodiment in the present invention;

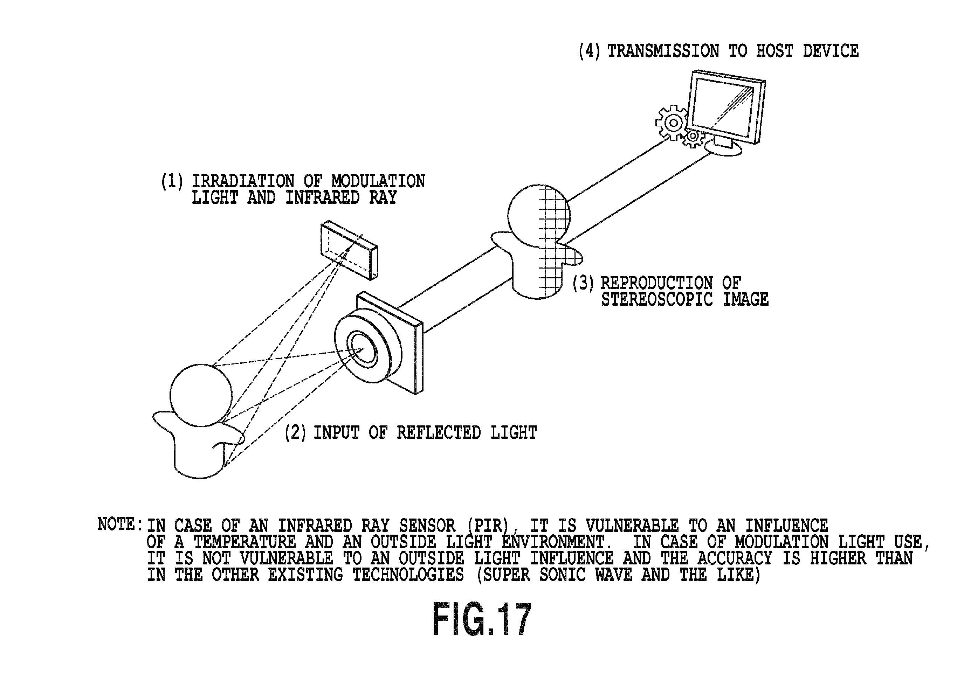

[Fig. 17] Fig. 17 is a diagram showing a method for taking in an image of an operator using the conventional three-dimensional camera;
[Fig. 18] Fig. 18 is a diagram explaining operation input using a stereoscopic display icon according to an embodiment in the present invention;
[Fig. 19] Fig. 19 is a diagram showing an example of a special display of operation input support according to an embodiment in the present invention;
[Fig. 20] Fig. 20 is a diagram showing a state of a virtual operation screen and an operation region according to an embodiment in the present invention;
[Fig. 21] Fig. 21 is a diagram showing a relation between a movement of an operator and an icon displayed on a screen according to an embodiment in the present invention;
[Fig. 22] Fig. 22 is a diagram showing an example of a special display of an operation input screen according to an embodiment in the present invention;
[Fig. 23] Fig. 23 is a diagram showing an example of various icons usable in an operation input screen according to an embodiment in the present invention;
[Fig. 24] Fig. 24 is a diagram showing a relation between a movement of an operator and an icon displayed on a screen according to an embodiment in the present invention;
[Fig. 25] Fig. 25 is a diagram showing a display screen of an example of inputting an instruction for moving a figure displayed on a screen by the present embodiment;
[Fig. 26] Fig. 26 is a diagram showing a relation between a movement of an operator and a menu displayed on a screen according to an embodiment in the present invention;
[Fig. 27] Fig. 27 is a diagram showing a relation between a movement of an operator and a menu displayed on a screen according to a different embodiment in the present invention;
[Fig. 28] Fig. 28 is a diagram showing a relation between a movement of an operator and a menu displayed on a screen according to a further different embodiment in the present invention;

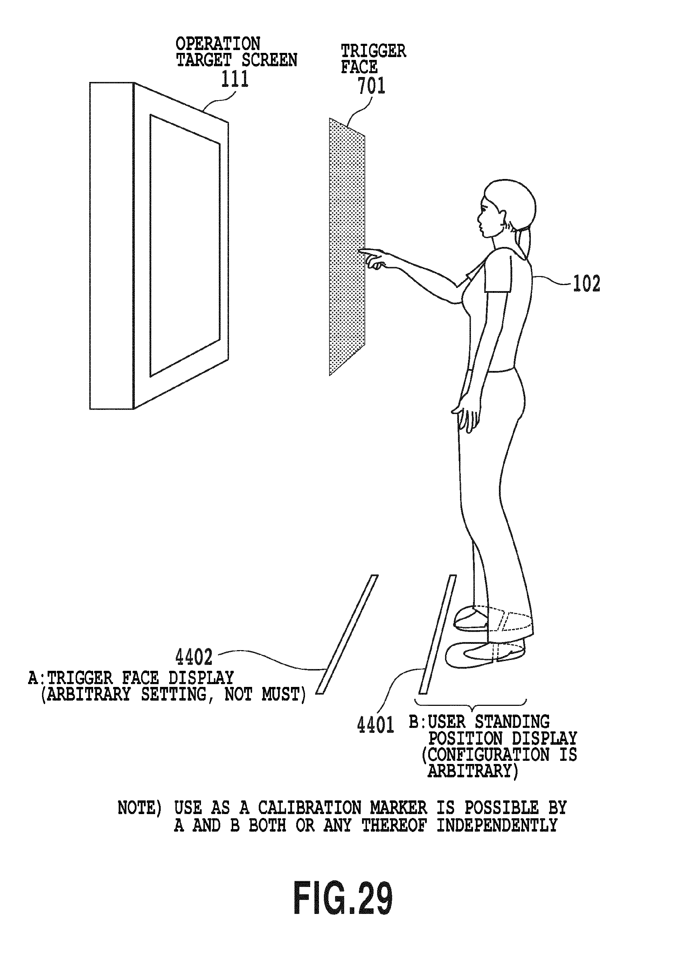

[Fig. 29] Fig. 29 is a diagram showing a state of a virtual operation screen and an operation screen forming reference according to an embodiment in the present invention;

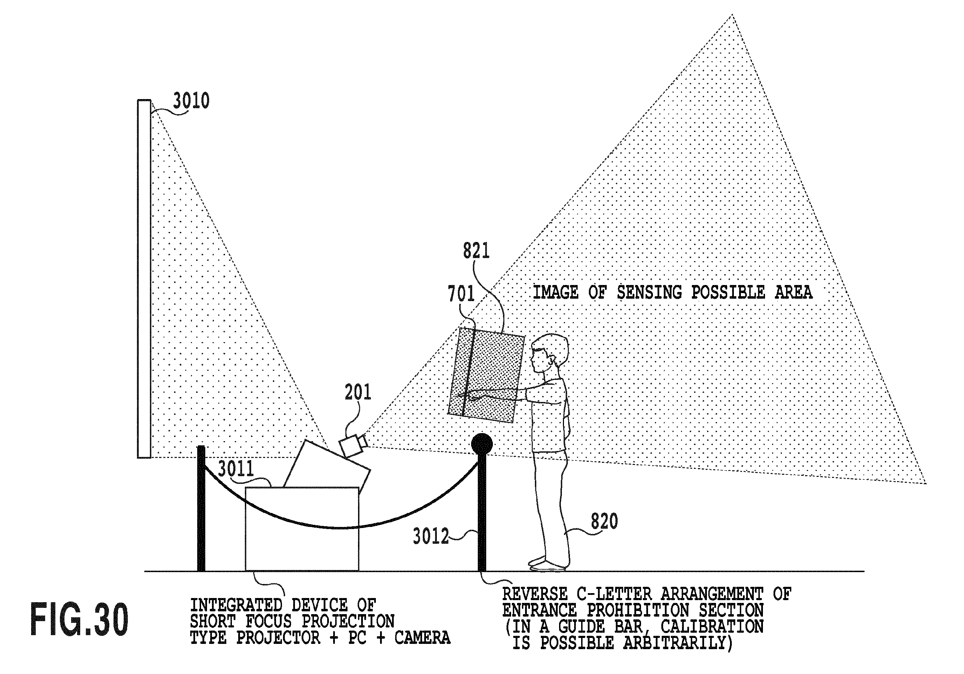

[Fig. 30] Fig. 30 is a diagram showing an example of adjusting an operation region by a screen by a projector or a position of a camera according to an embodiment in the present invention;
[Fig. 31] Fig. 31 is a diagram showing a relation between a movement of an operator and a menu displayed on a screen according to an embodiment in the present invention;
[Fig. 32] Fig. 32 is a diagram showing an image photographed for determining a region setting a position of an operation screen by a gesture of an operator according to an embodiment in the present invention;
[Fig. 33] Fig. 33 is a diagram explaining extraction of a position of an operation screen pointed out according to an embodiment in the present invention;
[Fig. 34] Fig. 34 is a diagram showing a distance data image obtained by a camera for extraction of a position of an operation screen pointed out according to an embodiment in the present invention;
[Fig. 35] Fig. 35 is a flow chart showing the process of setting a position of an operation screen by a gesture of an operator according to an embodiment in the present invention;
[Fig. 36] Fig. 36 is a flow chart showing the process of extracting a position of an operation screen pointed out according to an embodiment in the present invention;
[Fig. 37A] Fig. 37A is a diagram showing a variation of an operation screen setting gesture of an operator according to an embodiment in the present invention;
[Fig. 37B] Fig. 37B is a diagram showing a variation of an operation screen setting gesture of an operator according to an embodiment in the present invention;
[Fig. 37C] Fig. 37C is a diagram showing a variation of an operation screen setting gesture of an operator according to an embodiment in the present invention;
[Fig. 37D] Fig. 37D is a diagram showing a variation of an operation screen setting gesture of an operator according to an embodiment in the present invention;
[Fig. 37E] Fig. 37E is a diagram showing a variation of an operation screen setting gesture of an operator according to an embodiment in the present invention;
[Fig. 37F] Fig. 37F is a diagram showing a variation of an operation screen setting gesture of an operator according to an embodiment in the present invention;
[Fig. 38] Fig. 38 is a diagram showing an example of a target screen used in a grid snapping process according to an embodiment in the present invention;
[Fig. 39] Fig. 39 is a diagram showing a setting example of a grid used in a grid snapping process according to an embodiment in the present invention;
[Fig. 40] Fig. 40 is a diagram explaining a grid snapping process according to an embodiment in the present invention;
[Fig. 41] Fig. 41 is a diagram showing an example of displaying an icon in a lower part of a stereoscopic display device for specifying the current operator in the present embodiment;
[Fig. 42] Fig. 42 is a diagram showing a relation between Fig. 42A and Fig. 42B;
[Fig. 42A] Fig. 42A is a diagram showing a different example of displaying an icon in a lower part of a stereoscopic display device for specifying the current operator in the present embodiment;
[Fig. 42B] Fig. 42B is a diagram showing a different example of displaying an icon in a lower part of a stereoscopic display device for specifying the current operator in the present embodiment;
[Fig. 43A] Fig. 43A is a diagram showing an example of various variations for displaying operators in the present embodiment;
[Fig. 43B] Fig. 43B is a diagram showing an example of various variations displaying operators in the present embodiment; and
[Fig. 43C] Fig. 43C is a diagram showing an example of various variations for displaying operators in the present embodiment.

### Description of Embodiments

Hereinafter, embodiments in the present invention will be in detail explained with reference to the accompanying drawings.

### (First Embodiment)

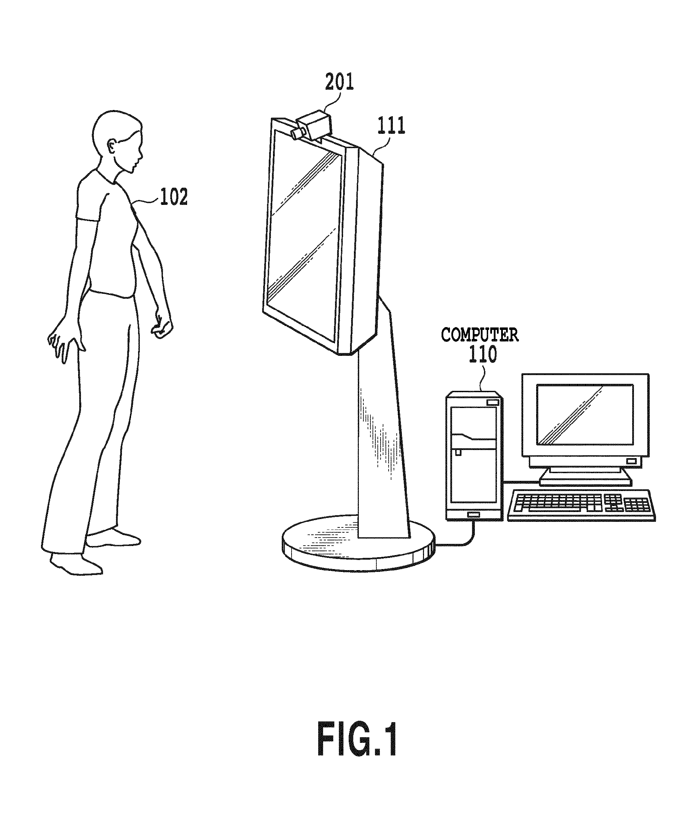

Fig. 1 is a diagram showing an example of an operation input system in the present embodiment. A stereoscopic display three-dimensional display device 111 in the present embodiment is arranged in front of an operator 102, and the operator 102 can perform an operation to a virtual operation screen stereoscopically displayed in a constant position between the operator 102 and the three-dimensional display device 111 in recognition of the event that a configuration of a finger or the like becomes a target of an operation determination. Various screen images for various applications at which the present system aims are displayed in the three-dimensional display device 111, but in addition to it, as described later, it is possible to support the operation input. That is, for example, a portion of the operator 102 as the target and the like are displayed in a corner of a screen to make the operator 102 recognize a movement which can be determined as an operation at the current point.

Here, in the present embodiment, the three-dimensional display device is used as an audiovisual monitor for an operator, but since any three-dimensional display device known in the present technical field can be used in the present embodiment, the three-dimensional display device itself will be briefly explained. The three-dimensional display device means a display device which can provide a stereoscopic screen image having a depth feeling or a protruding feeling to viewers, and is of various types. The three-dimensional display device can basically provide different images to both eyes of an operator for the operator to view an object stereoscopically. In general, in order for the operator to stereoscopically recognize some object as if it existed in the same space as he, since, by using a convergence function of human beings, it is necessary to provide a screen image having a parallax between right and left eyes (binocular parallax) and change a view way of the screen image in conjunction with a head movement of the operator (called motion parallax), the stereoscopic view is compatible with elements of correction, tracking and the like by human body dimension measurement by the three-dimensional camera of the present embodiment. For example, the position of the three-dimensional eye of the operator is captured, the captured position is corrected in real time, and thus it is possible to further improve the realistic sensations.

The three-dimensional display device is roughly categorized into two types, one in which an observer wears a pair of glasses having a specific optical characteristic to create an image having a binocular parallax, and the other of not using a pair of glasses. The display device of not using a pair of glasses is particularly called a bare eye stereoscopic display device.

In the type of wearing the glasses, "an anaglyph type", which is inexpensive but has a problem of losses in color taste and a fatigue feeling, has been famous from the past. In recent years, a polarized glass type or a crystal shutter by which a user can browse in full color without almost losing a color tone of a material is sold on the market, and the protruding feeling and the realistic sensations are significantly improved along with an improvement of the photography technology or the expression technology, so that this type of display device is close to full scale practical use.

As to the system of the three-dimensional display device of the type wearing the glasses, the anaglyph type, the polarized glass type and the crystal shutter are general as described above.

The anaglyph type is constructed such that right and left screen images are projected to overlap with light in red and blue, which are separated by glasses having color filters in red and blue. The anaglyph type is technically produced in the simplest manner and at a low cost, but was limited to the monochromatic screen image before. At present, it is possible to produce a screen image with the color information being left. However, at viewing, since the screen image has to pass through the color filters in red and blue, the color balance is damaged without fail.

The polarized glass type projects the right and left screen images in such a manner as to overlap by applying straight polarization intersecting therewith and separates them by a polarized filter to provide different images to both eyes. A silver screen or the like is usually used for preserving the polarized state. There are some polarized glasses in which a circular polarization is used instead of the straight polarization. There are some cases where the polarized glasses using the circular polarization maintains a cross stroke of the right and left screen images to be small even if an observer inclines his face, but since a light shielding characteristic of the circular polarization essentially has wave dependency, colors such as thick purple or yellow are visible in some cases.

The crystal shutter glasses are adapted to enable a stereoscopic view by providing different images to the right and left eyes by using glasses driven by the crystal shutter in such a manner that the right and left screen images are alternately shielded. The crystal shutter glasses are, because of alternately projecting the image having the parallax between right and left eyes at a rate twice as the frame rate of the source, excellent in reproduction of colors, but increase in cost, and further, need the facility for transmitting signals to the glasses by radio. The frame rate depends on a response frequency of the crystal shutter.

The movement of the operator 102 is photographed by the video camera 201, the photographed screen image is processed by a computer 110, and positions and sizes of an optimal virtual operation screen and an operation region including the optimal virtual operation screen are set based upon a position, a height, and a length of an arm of the operator 102 or body dimension information of a height, a shoulder width and the like, thus determining what operation a gesture of a portion protruding in a side of the three-dimensional display device 111 from the virtual operation screen means. That is, the computer 110 produces a stereoscopic image of the operator 102 from data obtained from the video camera 201 and calculates an optimal position of the virtual operation screen to the operator from the produced stereoscopic image, further adjusts the position and the size of the virtual operation screen from positions and arrangement states of the video camera 201 and the three-dimensional display device 111 to be described later, and determines whether or not hands and fingers of the operator 102 protrude into the side of the video camera 201 based upon the virtual operation screen, determining an operation content by estimating the protruding portion as a target of the operation.

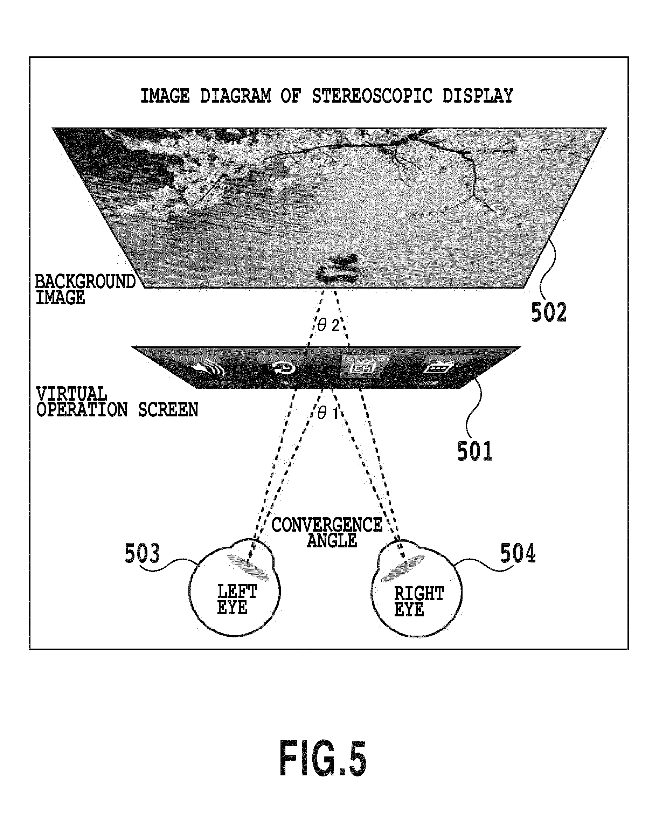

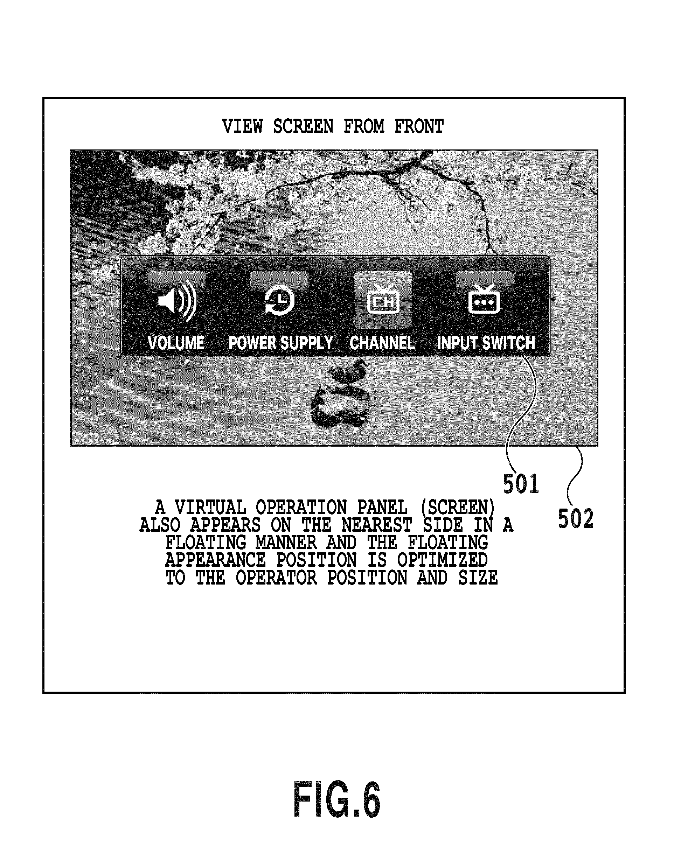

Meanwhile, the three-dimensional display device 111 displays the virtual operation screen in such a manner that the virtual operation screen is viewed as existing in the set or adjusted position from the operator 102. In consequence, the operator 102 recognizes the virtual operation screen as the stereoscopic screen image as if the virtual operation screen existed there and can perform an operation to the recognized stereoscopic screen image by using hands or fingers. This respect will be explained with reference to Fig. 5 and Fig. 6.

Fig. 5 is a diagram explaining a virtual operation screen stereoscopically displayed according to the present embodiment. The operator 102 views an image 502 and a virtual operation screen image 501 displayed on the three-dimensional display device 111 with the right eye 504 and the left eye 503, but the virtual operation screen image 501, for stereoscopic display, is formed of, for example, two images including parallax. When the virtual operation screen image 501 is viewed with the right eye 504 and the left eye 503, as shown in Fig. 5, it is possible to form a virtual operation screen which is stereoscopically displayed in such a manner as to be in front of the operator from the three-dimensional display device 111. The position where the virtual operation screen image 501 is displayed stereoscopically is determined from the image and the position of the operator photographed by the above-mentioned video camera 201, and the virtual operation screen image 501 is adjusted to have a convergence angle θ₁ to the three-dimensional display device 111 for display. Here, the image 502 is usually displayed in a two-dimensional manner, and therefore is displayed in a position of the display device 111 and is adjusted to have the convergence angle θ₂, but if the convergence angle θ₂ is defined depending on the use situation, the stereoscopic screen image with a depth sense can be provided. It should be noted that the position of the virtual operation screen image 501 shown in Fig. 5 is a position for displaying the virtual operation screen stereoscopically, but in some cases, the virtual operation screen image 501 is displayed in a position more or less different from a position where the virtual operation screen is actually formed as the operation feeling of the operator. The formation position of the virtual operation screen is not necessarily required to be in agreement with the stereoscopic display position of the virtual operation screen image.

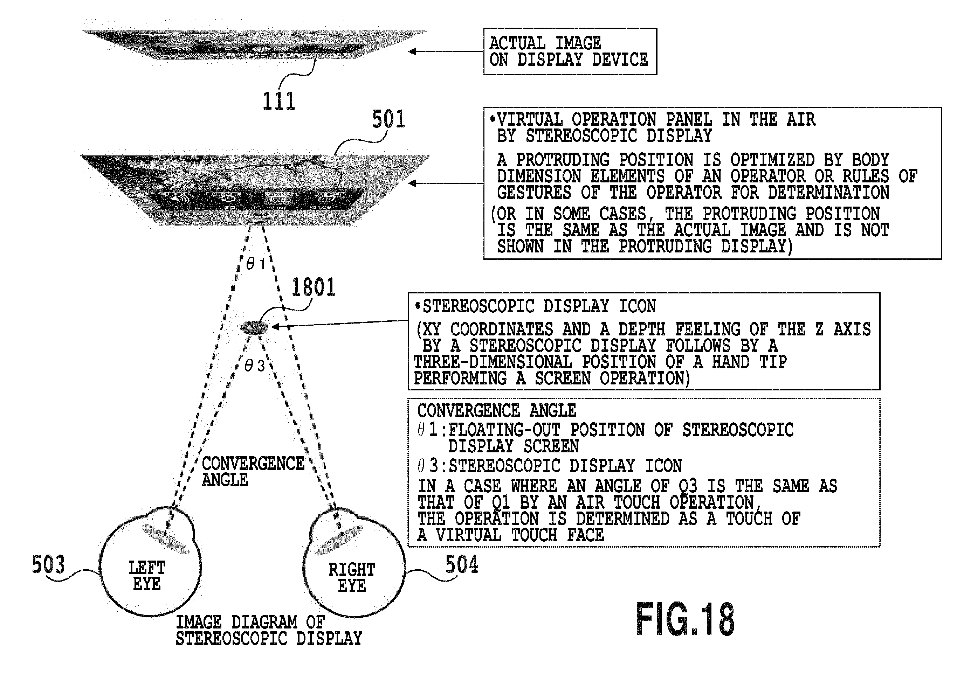

In this manner, the virtual operation screen image 501 is adjusted to have the convergence angle θ₁ to be displayed stereoscopically, but further, as shown in Fig. 18, an icon 1801 is adjusted to have a convergence angle θ₃ to be displayed stereoscopically, thus making it possible to guide a pawn and a fingertip. Concretely, the icon 1801 can be displayed stereoscopically to come to a position of the pawn or the like, thus facilitating to acquire a distance feeling to the virtual operation screen in the z direction or a position relation to the virtual operation screen in the xy directions. Other than that, the icon can be displayed stereoscopically in various modes and configurations. For example, except for displaying the icon at the same position as the finger tip, the icon may be displayed with more or less distances in the depth direction from the finger tip. There are some cases where by doing this, the position relation between the virtual screen and the icon tends to be visually recognized more easily than a method of looking at the finger tip, and in a case where a protruding distance to the front side of the virtual screen is too short, it can be compensated with this display. Because since the protruding to the front side of the eyes is generally difficult to be pint-adjusted in any case, in a case where the icon is displayed in a more or less deep position, the operator more easily operates it. Further, such a stereoscopic display icon can be displayed in any configuration and mode of a focus icon, which will be in detail explained in a second embodiment. For example, the icon is displayed near the finger tip as the stereoscopic display icon, while a size or a color of the icon is changed, thus making it possible for the operator to figure out a distance feeling to the virtual operation screen.

Fig. 6 is a diagram showing a state of a virtual operation screen according to the present embodiment where the virtual operation screen image 501 including icons for operation is displayed, but since the virtual operation screen 501 is stereoscopically displayed in an actual system, the virtual operation screen 501 is displayed such that it is seen from the operator in such a manner as to be in a position where if the operator extends his hand forward of the three-dimensional display device 111, the operator can touch the screen 501. Therefore, the operator can perform an operation to the virtual operation screen as if a touch panel or an operation panel existed there. Herein, the virtual operation screen 501 once displayed stereoscopically can change in position or configuration such that the operation is more naturally performed in accordance with the movement of the arm or body of the operator 102.

### (Process of Plural Operation Candidates)

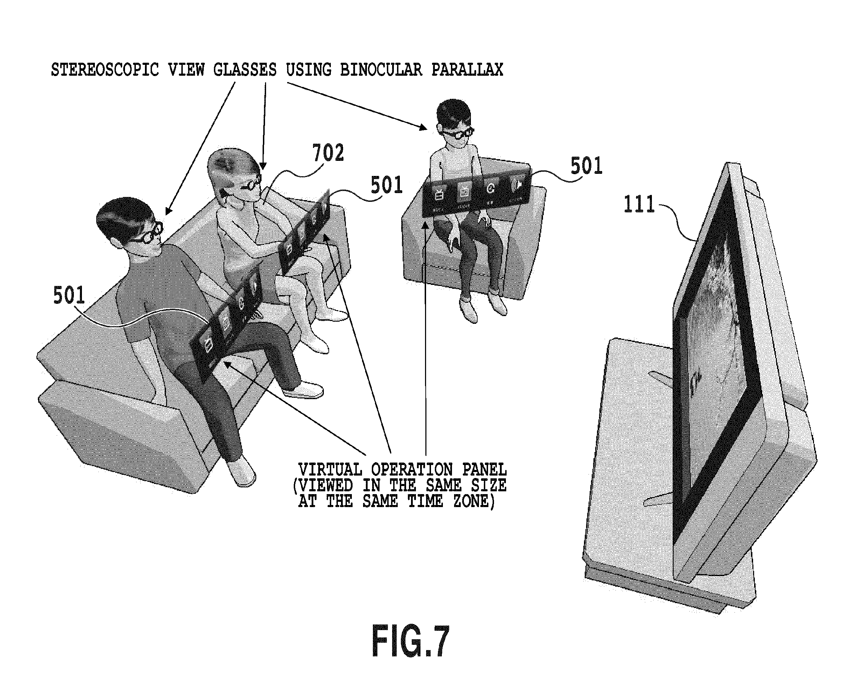

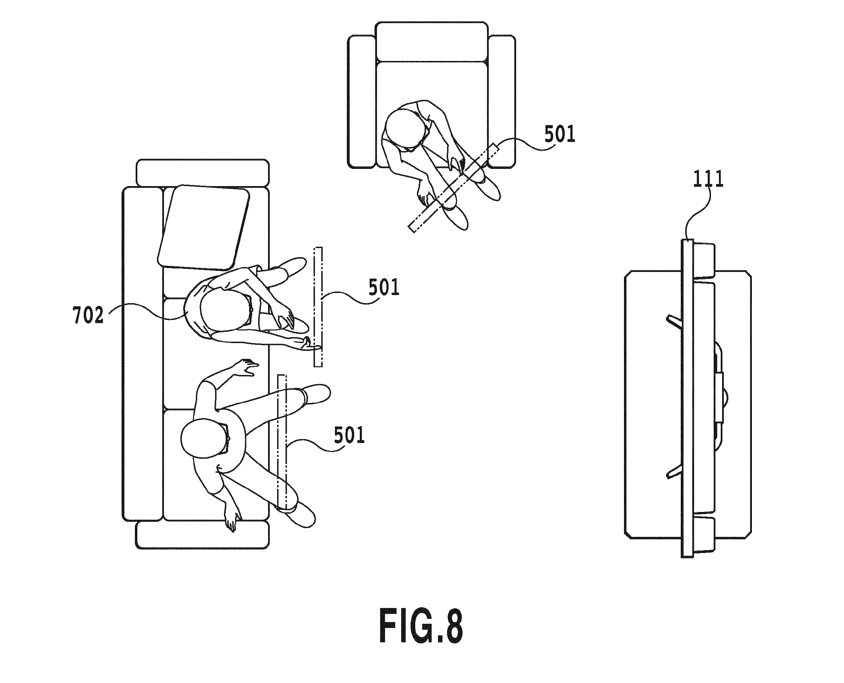

In addition, Fig. 7 and Fig. 8 are diagrams showing states of virtual operation screens in a television display apparatus as a use example of the present embodiment. A virtual operation screen can be produced to each of a plurality of viewers as shown in Fig. 7 and Fig. 8 to be operated individually or accept an instruction of any of the viewers with priority, thus performing various settings. However, for avoiding confusion due to respective different operations by the plurality of the viewers, one viewer is usually determined by any method and an operation input is allowed for only the viewer. Here, since the plurality of the viewers are candidates as operators each having authority of an operation to the apparatus, the viewers are called operation candidates. Hereinafter, a determination of an operator and the process after determining the operator in a case of a plurality of operation candidates will be explained. Therefore, the operation candidate may include the viewers as shown in Fig. 7 and Fig. 8, and candidates of an operator as a target in the present invention, for example, a plurality of players in a game machine, a presenter of the presentation and the like. It should be noted that in the system of the present embodiment, since a person as the target of the operator is limited to a person whom the system can recognize as the target, the operation candidate is limited to a person existing in a photography range of the video camera 201, for example.

A setting on who will be an operator among the plurality of the viewers and a setting of the virtual operation screen can be made using the process in the second embodiment to be described later, that is, at the time of setting the virtual operation screen in the second embodiment, first, a determination on who will be an operator among the operation candidates is made and then the determined operator can set the virtual operation screen, but in addition thereto, any method known in the present technological field can be used. For example, in an example in Fig. 7, immediately after starting a view of television, it is determined who will be an operator by any gesture (the operator is a viewer 702 in Fig. 7 and Fig. 8) or in the middle of the viewing, a setting mode can be made by a constant gesture or an operation of a remote controller to set the virtual operation screen. When the operator is determined, the virtual operation screen image 501 is displayed stereoscopically in such a manner as to match the operator 702. It should be noted that in a constant stereoscopic display system, the virtual operation screens are displayed stereoscopically respectively to the other viewers other than the operator 702 as shown in Fig. 7 and Fig. 8 by the characteristic of the stereoscopic display. However, as shown in the figure, a position where the virtual operation screen is formed is actually just in front of the operator 702, and it is substantially difficult for the other viewer to perform the operation. In this manner, in the regular stereoscopic display system, in a case where there is a possibility that a plurality of persons perform operations, there are not a few cases where one operator is first determined, a virtual operation screen adapted for the operator is formed, and it is necessary to make a stereoscopic display thereof.

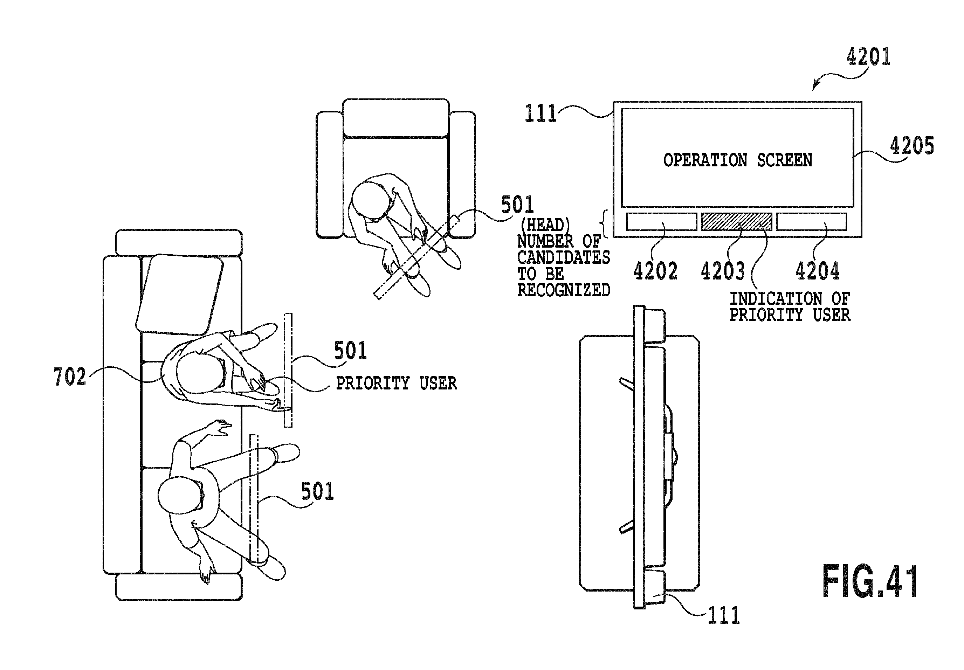

Here, in a case where such plural operation candidates exist and it is not clear who is the current operator, there is a possibility that an erroneous operation is caused by the event that a person who is not the operator tries to perform an operation or the operator performs an inadvertent movement in reverse. Therefore, the present embodiment is constructed such that, by displaying who is currently the operator on the screen, all the operation candidates can recognize who is currently the operator. Fig. 41 is a diagram showing an example of displaying icons 4202 to 4204 at a lower part of the three-dimensional display device 111 for specifying the current operator. By referring to Fig. 41, three persons viewing the television 111 become operation candidates. When one person in the middle of them is assumed as an operator 702, in an operation screen example 4201, three boxes 4202 to 4204 showing three candidates are displayed at a lower part of the screen, and the middle box 4203 is colored to show the operator 702 as a priority user, which is thus displayed in an emphasis manner. Such a display, since the video camera 201 can read the position of the operation candidate as described above, can be made by extracting the positions and the line-up order of the respective operation candidates from the read image.

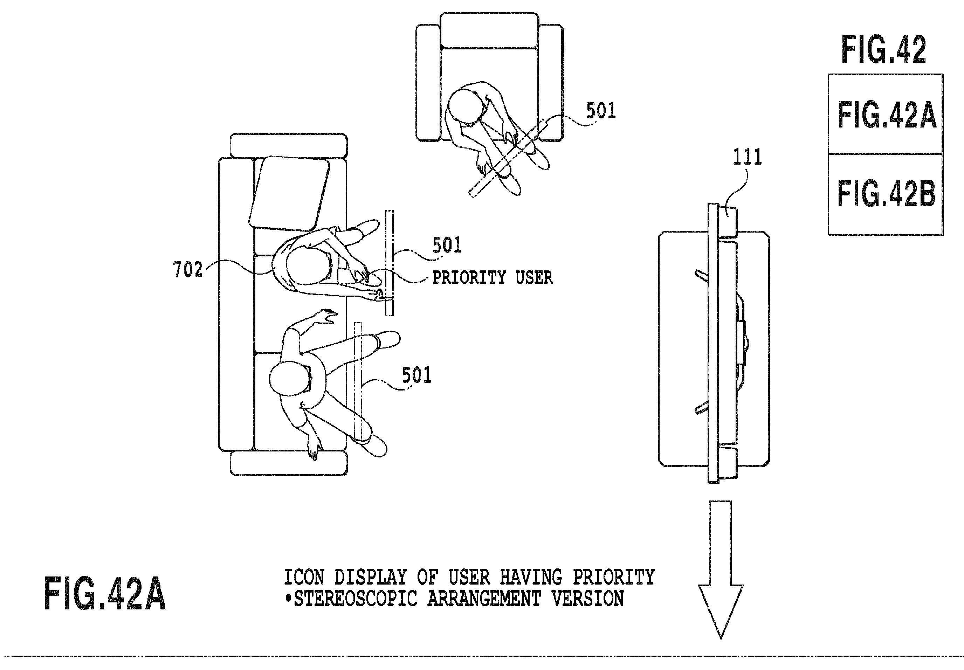

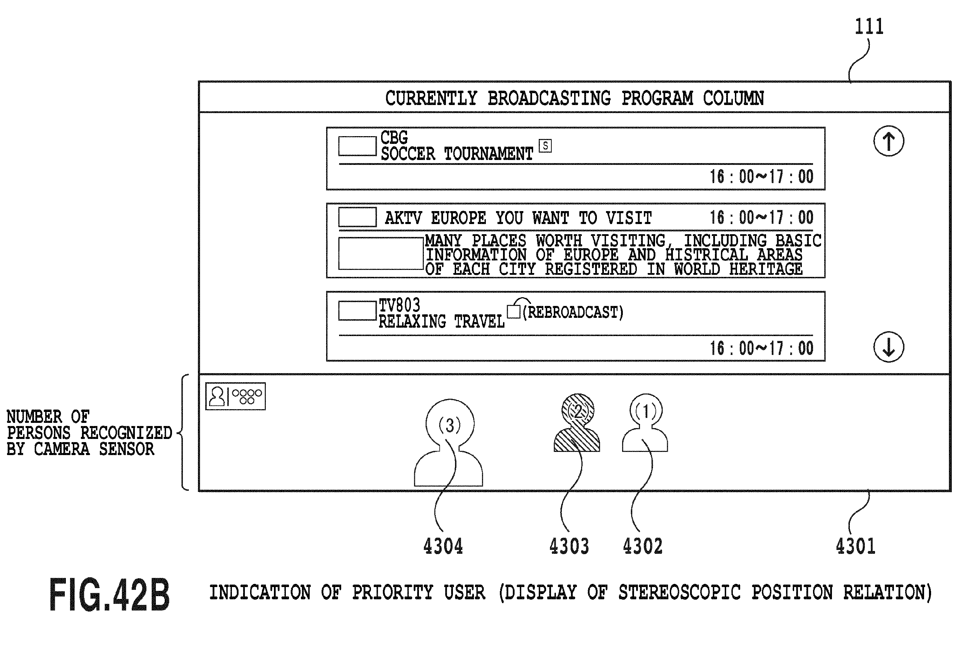

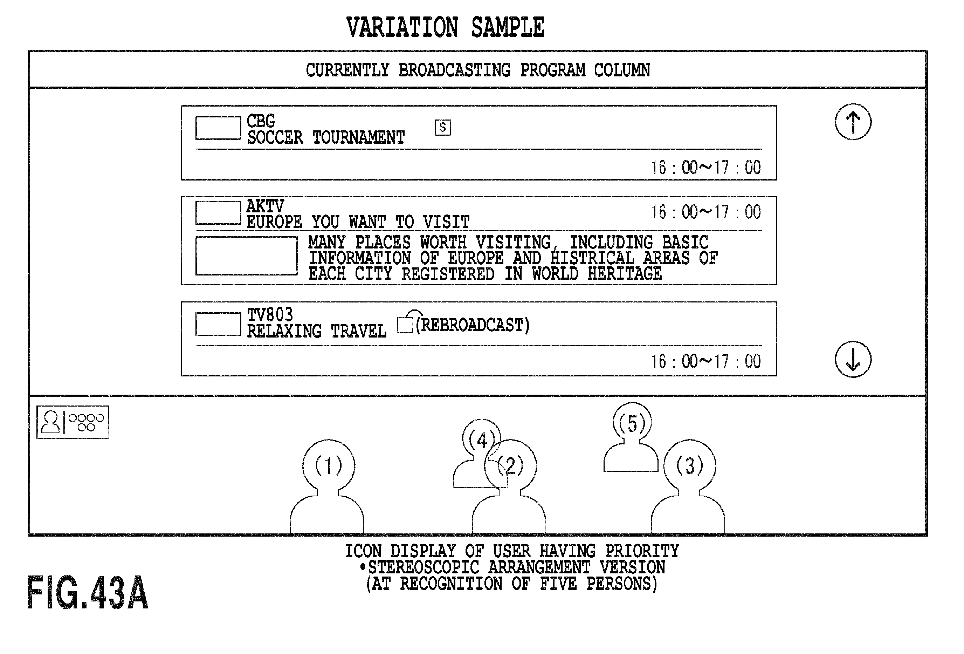

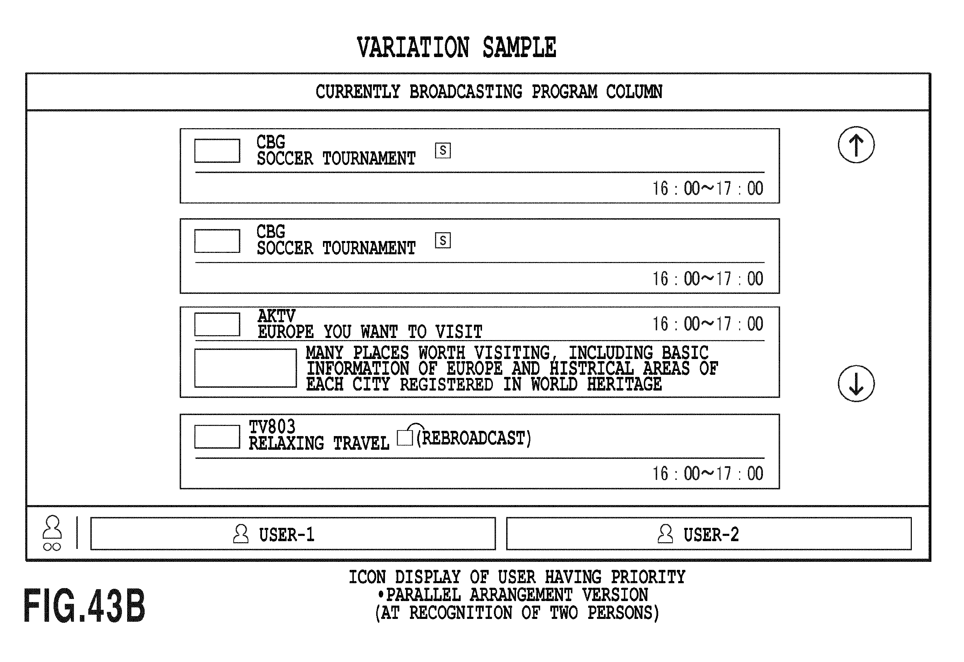

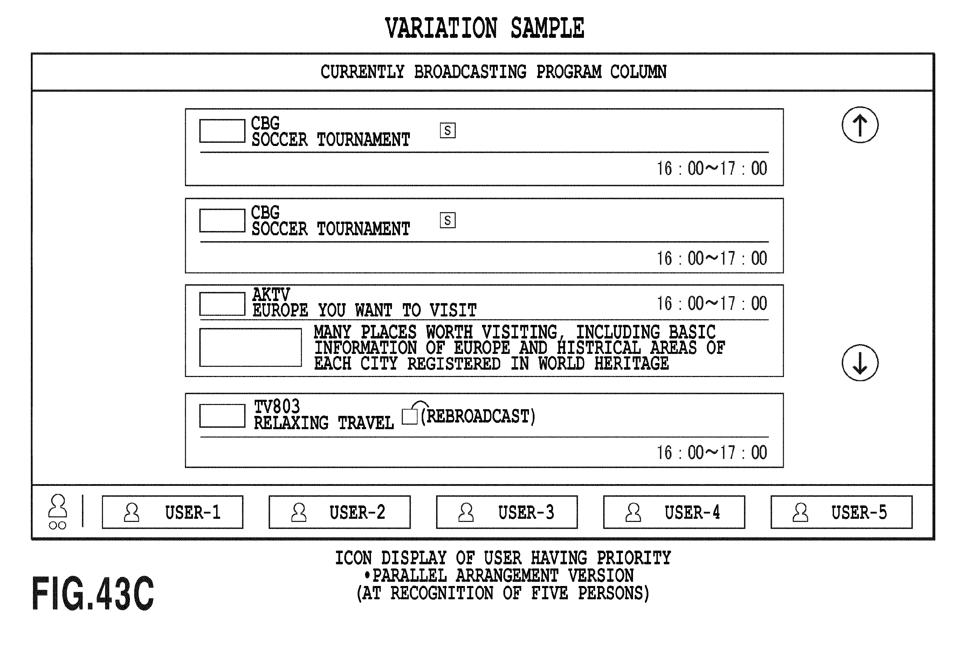

Fig. 42A and Fig. 42B are diagrams each showing a different example displaying icons 4302 to 4304 at a lower part of the three-dimensional display device 111. By referring to Fig. 42A and Fig. 42B, as compared to the example displaying the above boxes 4202 to 4204, since the icons 4302 to 4304 of persons are used in this example to be displayed in a region 4301 at the lower part of the monitor screen 111 and the distance feeling is also expressed by its size, recognition on who is the operator can be made more intuitively. Various displays are considered as a variation of the display showing such an operator, and, for example, methods as shown in Fig. 43A to Fig. 43C may be adopted. That is, in a case of two operation candidates, the candidates may be more simply displayed as shown in Fig. 43B. In addition, in a case of more operation candidates, boxes ("user 1" to "user 5") in number corresponding to the number of the operation candidates are displayed as shown in Fig. 43C.

Further, for showing three or more persons using humanoid icons, icons showing operation candidates may be displayed within an icon display region in consideration of positions and a line order thereof as shown in Fig. 43A. In this case, since the three-dimensional display device is used in the present embodiment, each icon is displayed in a depth based upon an actual position of the corresponding operation candidate, and the operator as the current priority user can be more intuitively recognized. That is, it goes without saying that the display of the operator explained by referring to Fig. 41 and Fig. 42 is effective also in the system using the regular two-dimensional display device, that is, even in a case of setting a virtual operation screen in the form to be explained in the second embodiment to be described later without using three-dimensional icons.

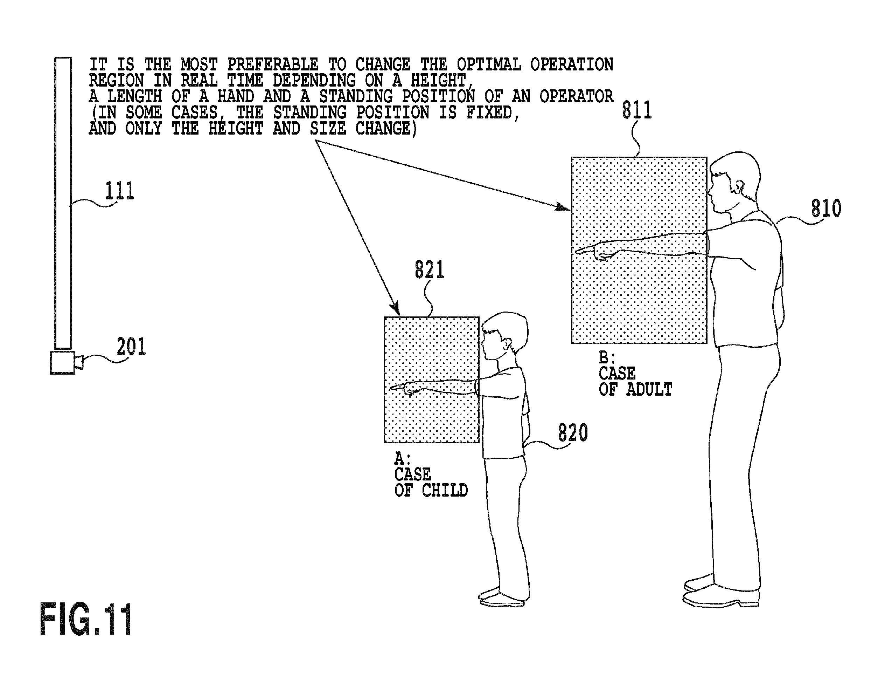

In Fig. 1, for obtaining an image, the video camera 201 is attached to an upper part of the three-dimensional display device 111 to produce the photography, but if a necessary image is obtained as shown in Fig. 11 to Fig. 15, the photography means is not limited thereto, and any photography means known in the present technological field, such as an infrared ray camera may be used, and any place near the monitor may be selected as the installation site. Here, in the present embodiment, the stereoscopic image including the operator can be produced by using a three dimensional (3D) camera as the video camera 201.

Further, an audio output apparatus such as a speaker (not shown) is attached in the system of the present embodiment, information on the display content and the operation can be conveyed to the operator by audio. By providing such a function, since the virtual operation screen is comprehended by not only displaying the operation content on the display device by the image but also simultaneously providing the instruction matter and result by audio, even an operator with visual disability can perform the operation.

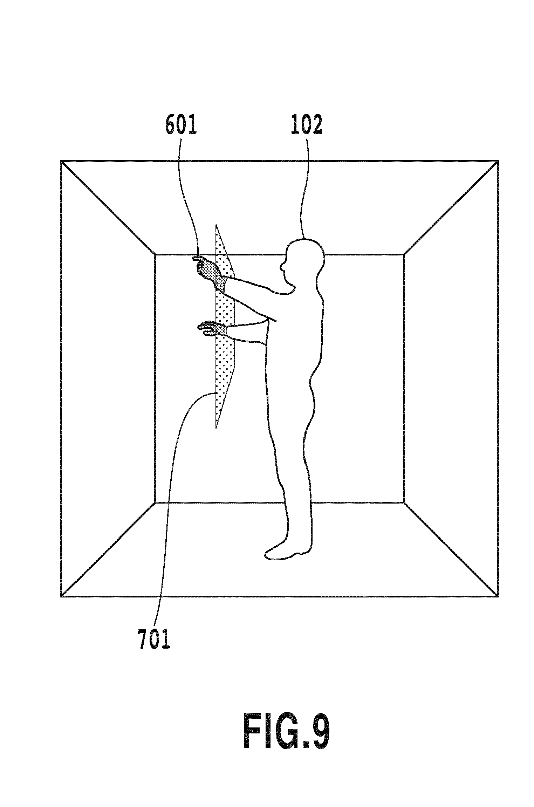

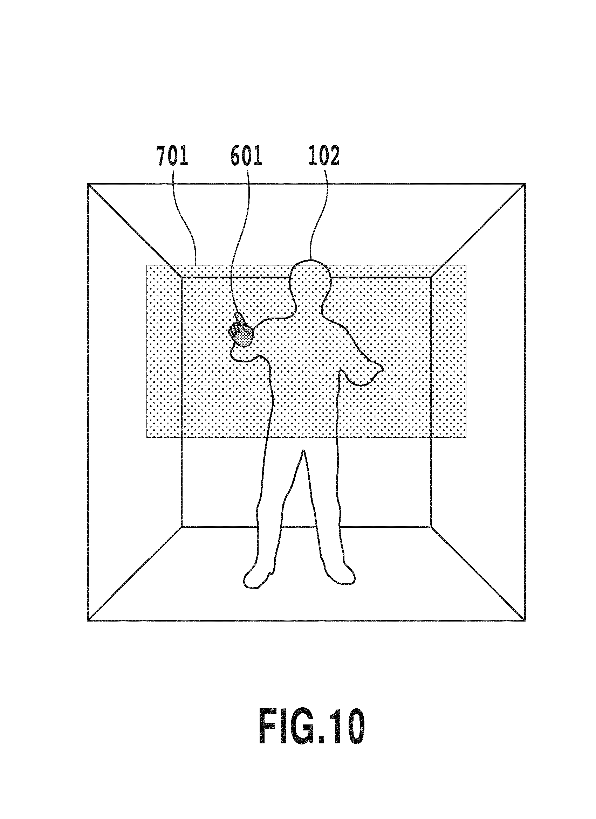

Fig. 9 and Fig. 10 are diagrams each explaining a special role of the virtual operation screen. A virtual operation screen 701 in the present embodiment is set based upon a length of a height or an arm or body dimension information of a height, a shoulder or the like of the operator 102, and the operator 102 assumes that the operation screen 701 exists virtually as the stereoscopic image. In a case where the operator 102 has an attempt of performing various operations, the operator 102 can show a gesture by extending a hand 601 forward on a basis of the operation screen 701. In addition, the operation screen 701 can be used as a judgment reference of the movement, for example, after a user in an operation region including the virtual operation screen takes any pose, an action can be determined by a pushing-out (determination) movement forward of the virtual operation screen or the pushing-out is made after determination of the operation. Therefore, a user tends to easily recognize it and the operability is close to the conventional touch panel. On the other hand, the operation variations increase overwhelmingly as compared to the conventional touch panel (operations by both hands, a behavior, plural fingers, and the like).

In the present embodiment, the virtual operation screen 701 as shown in Fig. 9 and Fig. 10 is adapted to be formed in real time when the camera 201 captures an image of the operator 102, but since a standing position of the operator is not constant until the operator starts to perform the operation, the virtual operation screen is not defined and the operation determination is also not easy to make. Therefore, in the present embodiment, the setting process of the virtual operation screen may start at timing where the body of the operator has stopped for a constant time within a photography range of the three-dimensional camera.

In this manner, the formation of the virtual operation screen in the present embodiment can be made in real time, but also in this case, the operation determination can be more accurately made by limiting the standing position of the operator within a constant range optimal to the system by any method. For example, although not shown, the operator can be guided in movement by drawing footprints showing a standing position of the operator on a floor surface, by making the operator recognize existence in a constant limit range by a monitor or an arrangement of the system, or by placing a screen, thus performing the operation within a constant range. A position or a size of the virtual operation screen which the operator can naturally recognize depends greatly on a position relation between the operator and the display device, and there are some cases where it is preferable that positions of the display device, the camera, and the operator, and the like are in advance estimated in the entire system.

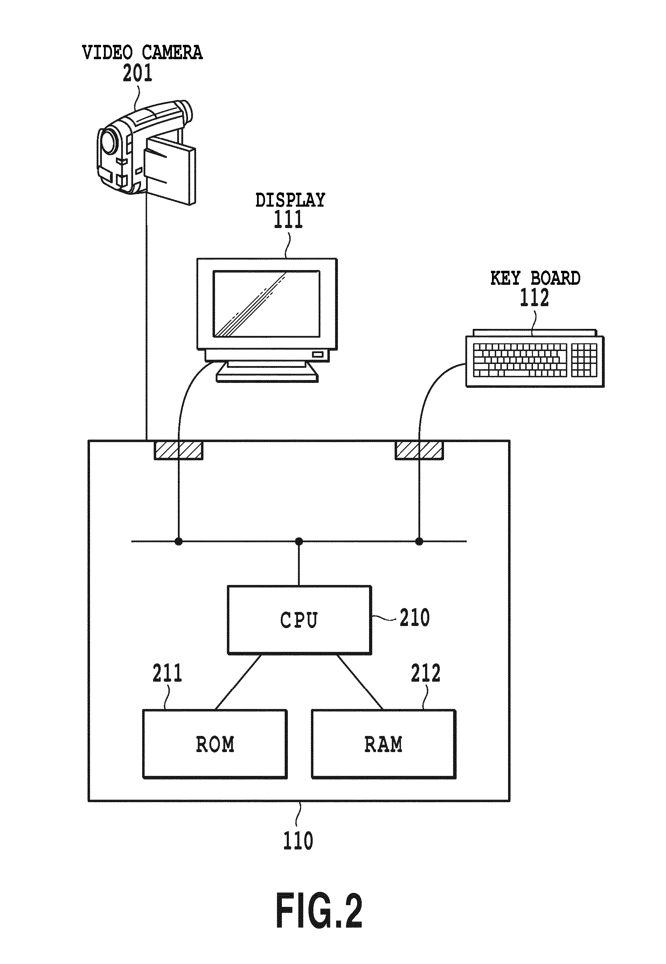

Fig. 2 is a block diagram schematically showing the structure of the computer 110 in the image recognition apparatus of the present embodiment. The video camera 201 attached to the monitor 701 for photographing the operator 102 and the like is connected to the computer 110, and the photographed image is taken in the computer 110. In regard to the image obtained by the photographing, extraction, calculation of a position, and the like of the image as the feature in the present embodiment are carried out in the CPU 210, and it is determined whether or not a part of the body extends to a side of the video camera from the operation screen, based upon the calculated position. The computer 110 is generally provided with the CPU 210 and executes programs stored in a ROM 211 or the like on a RAM 212 to output the process result based upon the image inputted from the image recognition apparatus to the three-dimensional display device 111 or the like. In the present embodiment, the three-dimensional display device 111 can output the above-mentioned virtual operation screen and in addition thereto, various screen images provided from various applications which the operator tries to experience, and also display the information which will become support of the operation input to be described later.

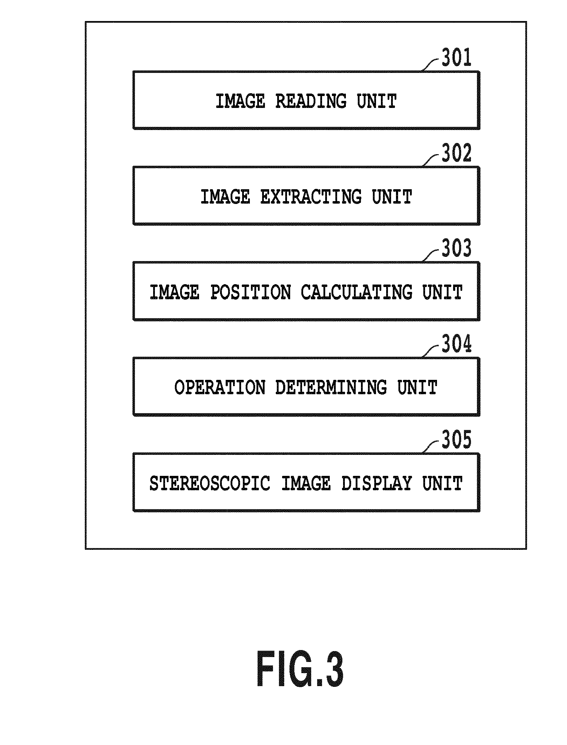

Fig. 3 a block diagram showing an example of functional modules of the program processed in the CPU 210 of the computer 110 in the present embodiment. As shown in Fig. 3, the processes in the present system is executed by an image reading unit 301, an image extracting unit 302, an image position calculating unit 303, an operation determining unit 304 and a stereoscopic image display unit 305. It should be noted that in the present embodiment, the process of receiving the image from the video camera 201 to the process of performing output of data are executed by five modules, but the processes are not limited thereto, and may be executed by use of other modules or by the less number of the modules.

### (Process of the Present Embodiment)

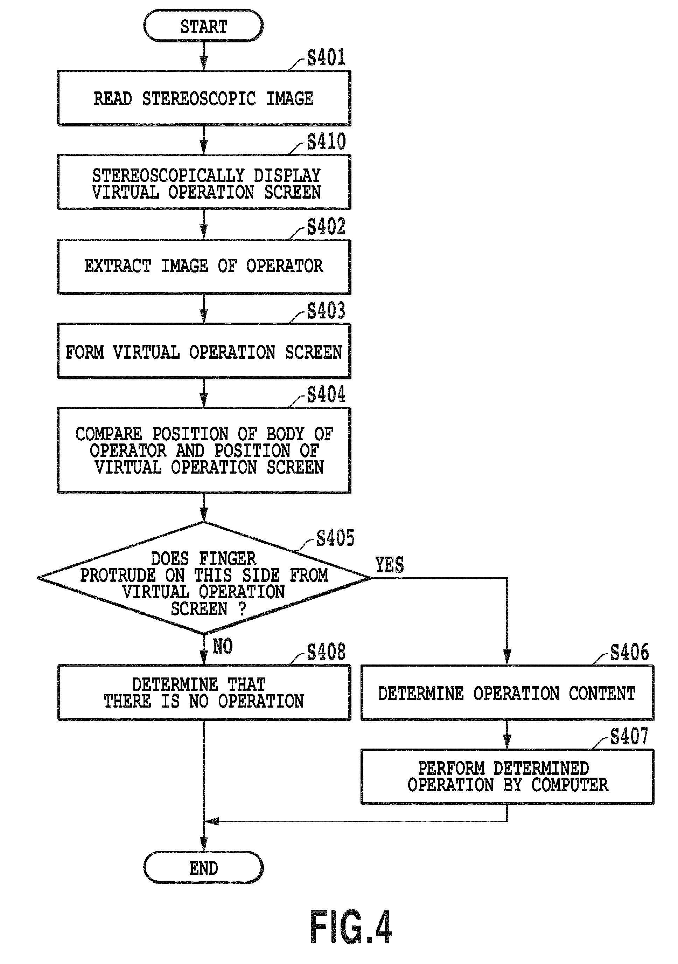

In the present embodiment, as shown in Fig. 10, the virtual operation screen is formed as a stereoscopic image based upon the image of the operator 102 photographed by the video camera 201, likewise positions of hands or fingers as a part of the operator 102 photographed are defined and the process of calculating a position relation between the virtual operation screen 701 and a hand-finger 601 of the operator 102 is executed. In the present embodiment, when initial settings known in the present technological field are assumed as a pre-condition for executing such a process, for example, assuming a case where the image recognition apparatus in the present embodiment is newly installed, it is necessary to input information such as a distortion of use lens of the video camera 201 to be used, and a distance between the three-dimensional display device 111 and the lens, as the preliminary preparation. Further, a threshold value and the like are in advance adjusted. When the initial settings in the system are competed, the process in the present embodiment is supposed to be executed, which will be hereinafter explained with reference to Fig. 4.

Fig. 4 is a flow chart of the process in the present embodiment. First, the image reading unit 301 reads data photographed by the video camera 201 (S401), and the image extracting unit 302 extracts an image of an operator from the data (S402).

As a result of this preparation, a virtual operation screen and an operation region are determined based upon the extracted image of the operator 102 (S403). Here, a configuration of the operation screen is formed as a rectangular shape rising perpendicularly from the floor surface by referring to Fig. 11 and the like, but is not limited thereto, and the operation screen may be formed to have various configurations (including a size and an angle to the display device) depending on an operation mode of the operator. Concretely, as in the case of setting the virtual operation screen in the second embodiment to be described later, the body shape and the position of the operator are photographed as a stereoscopic screen image by the three-dimensional camera to determine the optimal configuration and position of the virtual operation screen from the position, the size and the like of each portion in the operator. For example, the formation position of the virtual operation screen can be defined to a position where a stroke of an arm at an operation time is optimal based upon a length of the arm from a position of the eye of the operator, but the distance from the operator may be determined based upon a length and a size of the other portion of the operator, and the starting point for measurement may be defined as not the eye but the shoulder. In addition, if it is difficult to extract the position of the eye, a position of the head may be defined as the starting point. Further, in the present embodiment, since the operator usually wears polarized glasses or shutter glasses for viewing a stereoscopic image, the formation position determination of the virtual operation screen can be facilitated by attaching a marker assisting in extracting the position from a screen image of the three-dimensional camera on the front surfaces of the glasses and the like.

Here, the operation region includes the virtual operation screen as the feature in the present embodiment and is a region where hands and fingers as a main body of the operation in the operator are primarily moved. As explained in the support to the virtual operation screen to be described later, a given region exceeding the virtual operation screen from the body of the operator is used for operation recognition of the present invention. For example, in regard to an adult operator 810 as shown in Fig. 11, the operation region can be formed as an operation region 811 in consideration of a height (view position) and a length of the arm. In a case of a child operator 820, since the height is lower and the arm is shorter, an operation region 821 can be set in accordance with it. If the virtual operation screen is set within this operation region, when the operator naturally moves his hands and fingers, the operation which the operator intends to perform can be determined based upon the movement of the hand or the finger.

More concretely, for example, a range of the depth can be made to a fingertip when the operator extends his hand forward, a range of the horizontal width can be made to a length of the right and left wrists when the operator extends his hands right horizontally, and a range of the height can be made from a position of a head of the operator to a position of a waist thereof. In addition, in a case where target persons of the system in the present embodiment are defined as from low graders in an elementary school to adults, a width of the height is in a range of about 100cm to about 195cm and a correction width of the upper and lower positions of the operation region or the virtual operation screen requires about 100cm as the height difference. It should be noted that the virtual operation screen and the operation region may be formed at each time or may be formed under a given condition, or these setting timings may be selected in advance or at each time.

In this manner, when the configuration and the position of the virtual operation screen are determined, the stereoscopic image forming the virtual operation screen in the configuration (including a size and an angle to the display device) determined in a position determined as viewed from the operator is produced by the stereoscopic image display unit 305 with any method known in the present technological field and is displayed in the three-dimensional display device 111 (S410). Therefore, since the operator can accurately touch the virtual operation screen displayed stereoscopically with hands or fingers, operations such as touching icons displayed on the virtual operation screen can be performed. Here, in the present embodiment, the sequential flow to a point of performing the stereoscopic display of the virtual operation screen is explained, but basically in a case where the operator moves as a whole and the operation is difficult to be performed on the initially set virtual operation screen, the optimal configuration and position are calculated to once more carry out the stereoscopic display based upon the calculation, and the similar process is also repeated depending on contents to be displayed as the virtual operation screen. For example, in a case of displaying icons as the virtual operation screen, for facilitating the designating process of the icon by the operator, the virtual operation screen can be re-displayed with the optimal position and configuration in response to movements of hands or fingers.

The operation determining unit 304 uses a relative relation between the virtual operation screen displayed stereoscopically in the operation input system and the operator 102 (S404) to determine that the operation has started when a part of the operator 102 comes on this side of the operation screen as viewed from the video camera 201 (S405), and determines to which operation a configuration or a movement of each portion corresponds, from the configuration and the movement of each portion (the hand is open, two fingers are raised or the like) (S406). Here, which configuration and movement correspond to which operation can be determined by the system independently or can be determined by taking any of methods known in the present technological field, or it can be determined that the position is simply touched by an operator, for example, an icon is selected or a button is pressed. The determined result is executed by the computer 110 assuming that such input is made (S407), and in a case where the hand does not extend to this side from the virtual operation screen, it is determined that the operation is not performed, and the process ends (S408). The determination of the operation content is not limited to the process explained herein, but any of methods known in the present embodiment can be used. In addition, the special determination method is also omitted, but in general, the configuration and the movement of the body of an operator such as a gesture and the operation content which it means are stored in a data base or the like, and after the image extraction, access to the data base is made to determine the operation content. In this case also, the determination accuracy can be improved by using the image recognition technology or artificial intelligence based upon the method known in the present technological field.

Here, it is understood that the position and the size in which the virtual operation screen is formed changes depending on a case where the operator is a child or an adult. Further, it is necessary to adjust the virtual operation screen depending on a position of the camera 201 or a position or a mounting angle of the three-dimensional display device 111 in addition to a difference of the body shape such as a height of the operator. The three-dimensional camera can usually perform a distance measurement to a target object in parallel with or in a concentric shape with a CCD or a lens face. In a case where a monitor is installed in a height of eyes of an operator, a camera is in a close position, and each of them is installed perpendicularly to the floor surface, if the operator is in a standing position, it can be said that there is no necessity of particularly adjusting or correcting the position relation of each other and the like for producing an appropriate operation region. However, in a case of using a ceiling hanging type monitor or a super jumbo type monitor or projector, the position relation between the camera installing position or the monitor and the operator is assumed in various situations.

In general, even if the virtual operation screen is displayed stereoscopically, since an operator performs an input operation while viewing an operation target screen, unless the virtual operation screen is always arranged perpendicularly to a straight line connecting a sight line of the operator and an operation target screen to produce an operation region along the virtual operation screen, an angle of a pushing stroke of the operator in the z direction causes non-agreement. Therefore, even if the operator performs a pushing operation to a point targeted, the pushing operation shifts along any of the stroke angles following the pushing operation, and there is a possibility that a normal operation can not be performed. Therefore, in a case of forming the virtual operation screen, it is preferable to adjust an angle, a size or a position in some cases to be formed in accordance with positions and arrangement states of the monitor, the camera and the operator.

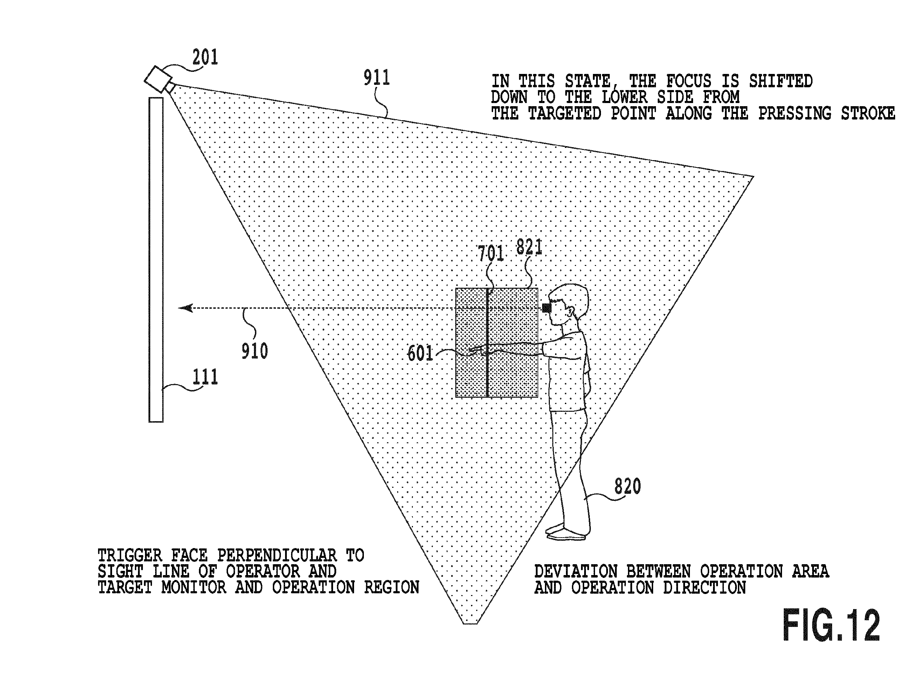

By referring to Fig. 12, an operation region 821 and a virtual operation screen 601 are defined to match an operator 820 as shown in Fig. 11, but in a case where the camera 201 is arranged in the upper part of the three-dimensional display device 111 as in the case of an example shown in Fig. 12, unless the virtual operation screen 601 is perpendicular to a direction 910 where the operator 820 extends his arm, the operator 820 can not obtain a good operation feeling to the virtual operation screen. Therefore, it is preferable that the virtual operation screen 601 is not a plane perpendicular to a sight line direction of the camera 201.

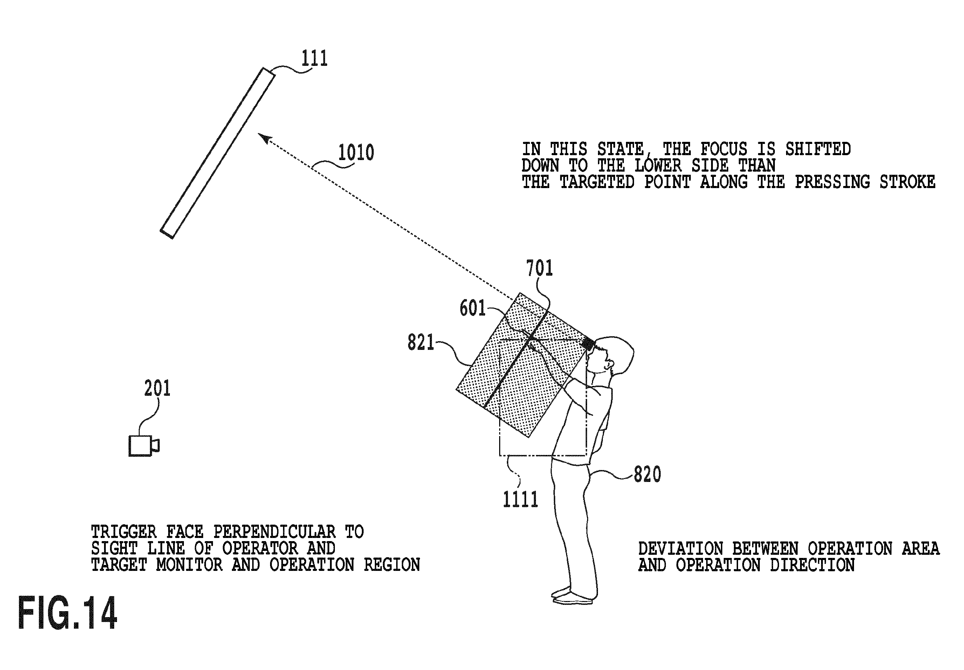

In addition, by referring to Fig. 13, since the three-dimensional display device 111 itself is installed upward and is attached at some degrees, the virtual operation screen 701 becomes a plane perpendicular to a direction 1010 having an upward inclination such that the operator 820 can perform an operation while looking up at the three-dimensional display device 111. In this case also, since a viewing field 1011 of the camera 201 is inclined at a constant angle to the sight line direction 1010 as similar to the example shown in Fig. 12, it is preferable to correct the information read by the camera 201 to match the inclined virtual operation screen 701. Further, by referring to Fig. 14, the camera 201 is disposed away from the three-dimensional display device 111 and near the floor, and a larger angle is formed between the sight line 1010 of the operator 820 and the viewing filed of the camera 201. Therefore, it is preferable to make the correction corresponding to that angle.

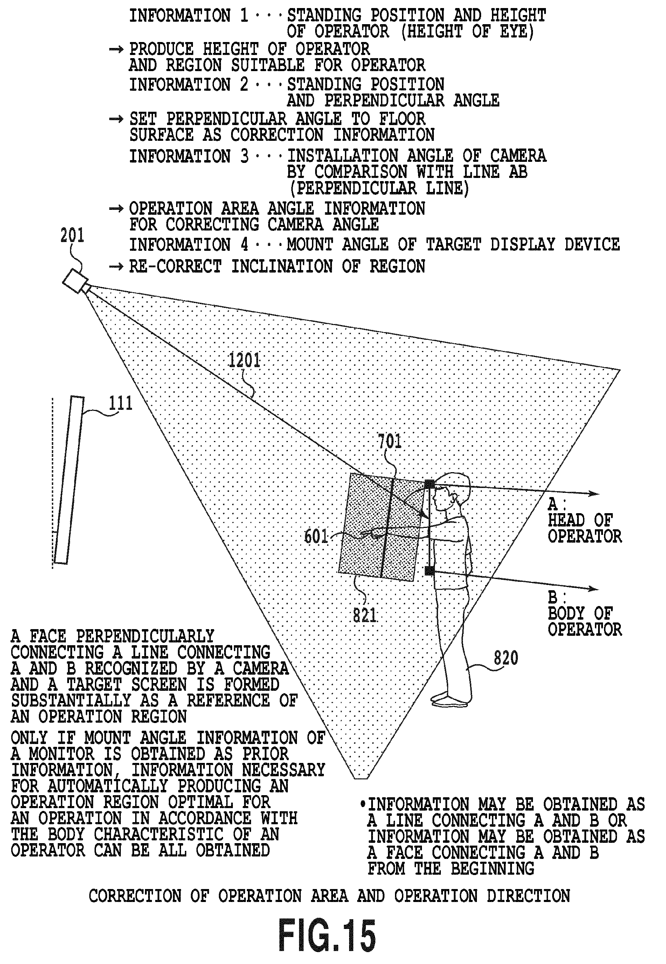

Fig. 15 is a diagram for explaining an example of defining the virtual operation screen 701 and the operation region 821. In the present embodiment, for determining the configuration and the position of the virtual operation screen, information of positions and arrangement methods (for example, at which angle it is installed) of the three-dimensional display device 111 and the camera 201, a standing position and a height of the operator 820, and the like is used. That is, as an example, first, the virtual operation screen 701 perpendicular to a sight line of the operator is calculated from a height of eyes (body height) of the operator 820 to the three-dimensional display device 111 and from a standing position of the operator 820. Next, an angle between line A-B connecting a head and a body of the operator 820 and a center line 1201 of the viewing filed of the camera 201 is measured to correct each inclination of the virtual operation screen and the operation region. A stroke of the arm may be extracted from an image of the operator or may be defined based upon information of an average length of the arm for each height separately from the obtained information of the height.

The virtual operation screen and the operation region in the present embodiment are defined in such a manner that the determination on the natural operation and the easier operation is possible based upon the positions and the arrangement states of the camera, the monitor and the operator as described above, and an actual movement of the operator is detected to determine which operation is performed. However, the process necessary for putting the present embodiment into practice, that is, the special process not explained herein, for example, the process on how the position or the configuration is specified from the image of the three-dimensional display device 111 or the determination process on whether or not a part of the operator passes through the virtual operation screen can be achieved also by using any of methods known in the present technological field.

### (Support of Operation input)

As explained above, by stereoscopically displaying the virtual operation screen by the three-dimensional video camera, the operator can recognize it as if an operation screen such as a touch panel existed on a space, and performs various operations to the operation screen, thus making it possible to perform the operation input by using the entirety or a part of the body. Further, by supporting the operation input such as displaying the screen image of operator to the virtual operation screen on the three-dimensional display device 111, the system in the present embodiment can be more easily used.

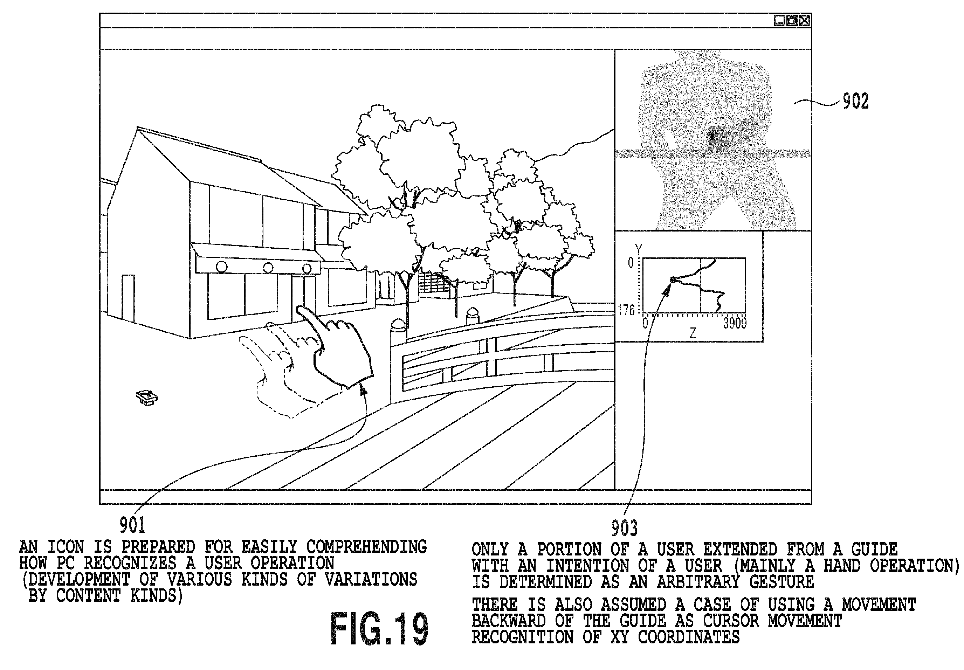

Fig. 19 is a diagram showing an example of displaying guidance as the support of such operation input on the display device 111. For example, in a case of pointing out somewhere of an image displayed in the center portion of the display device111 by a pointer, an operator can point a desired spot by extending a hand-finger into the image formed as the virtual operation screen itself, but by displaying the state of the pointing as a pointer 901 shown in Fig. 19, the operator can perform the next operation while recognizing and confirming the operation having been currently performed. According to this example, for example, the pointer 901 is adapted to be displayed on a screen at the time a hand-finger protrudes from the operation screen and disappear at the time of pulling in from the operation screen or be displayed in dark and light coloring. Therefore, the operator can execute the input method of the present embodiment in a natural manner from the movement of the hand and the state of the pointer displayed on the display device 111. Likewise, by displaying an operation screen 902 having expressed the state of the operator himself in the form as shown in Fig. 9 and Fig. 10 on the top right corner of the three-dimensional display device 111 to be small, how the operator behaves at present and the movement is determined as what kind of the operation in the system can be displayed. In addition, a polygonal graph 903 having graphed the movement of a hand is shown to make the operator himself be conscious of the forward and backward movements of the hand, thereby expecting a more accurate operation. Further, although not shown, the support can be made in such a manner that a gesture usable in the system can be displayed to the guidance to prompt the operator to perform the operation input according to the display.

### (Operation In Deep Side of Virtual Operation Screen - Virtual Operation Layer)

The present embodiment is designed such that an operator performs an operation on a basis of a virtual operation screen stereoscopically displayed virtually on a space as if an input device such as a touch panel existed therein, thus certainly determining the operation content, but the content of the operation thus determined is determined based upon a position relation between the virtual operation screen in the deep direction from the virtual operation screen and in a direction away from the operator and a part of the body such as a hand of the operator or an object worn by the operator. For example, the two-layered or three-layered operation region is set as a virtual operation layer in the z axis direction which is a direction away from the operator, and the kind of the operation is determined based upon into which layer the hand of the operator enters, thus determining the operation content from the hand behavior within the layer. At this time, when the hand of the operator, the kind of the operation and the like are displayed on the display screen which the operator virtually recognizes, the operator can further facilitate the recognition of the operation. It should be noted that a distance in the z axis direction between the part of the operator and each of the faces dividing the respective layers can be obtained by the method for calculating a distance between the formed virtual operation screen and the part of the operator as described above.

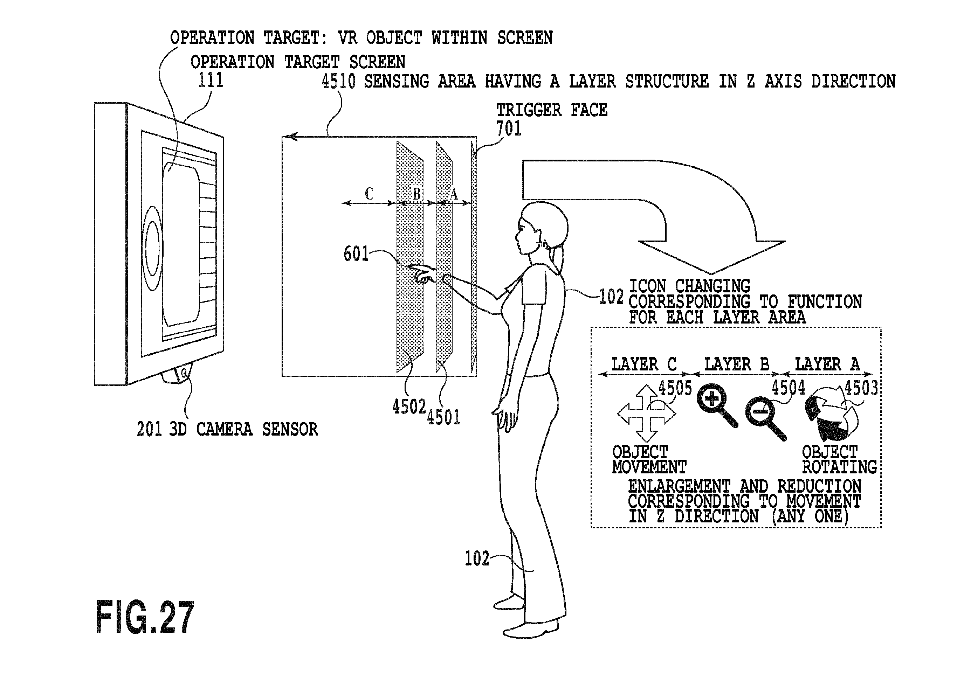

As will be explained more concretely, a trigger face 701 shown in Fig. 27 is a virtual operation screen in the present embodiment. According to any of the aforementioned embodiments, the finger 601 enters in the z axis direction from the trigger face 701, it is determined that the operation is performed. Further, the operation region ahead of the trigger face 701 is divided into three layers of layer A to layer C at a screen 4501 and at a screen 4502, to each of which a different kind of the operation is assigned. In an example in Fig. 27, an operation of rotation of an object is assigned to layer A, an operation of scaling is assigned to layer B, and an operation of transfer of an object is assigned to layer C. The determined operation is performed by the movement of the finger 601 in each layer. For example, in layer A, at the time when the finger 601 passes the trigger face 701, the object pointed around a position shown in an icon showing the finger 601, for example, in a rotating icon 4503 is rotated in response to the movement of the finger 601. In layer B, for example, a scaling icon 4504 is displayed on the three-dimensional display device 111, wherein when the finger 601 is moved in the z direction, the object can be enlarged, and when moved in the opposite direction, the object can be reduced.

Likewise, in layer C, a movement icon 4505 is displayed in a position of the finger 601 on the target displayed and pointed on the three-dimensional display device 111, thereby making it possible to move the object in accordance with the movement of the finger 601. Here, the face 4501 and the face 4502 partitioning the respective layers may be arranged such that each layer has the same thickness or may be arranged such that each layer has a different thickness in accordance with the operation kind assigned to each layer. For example, in the example in Fig. 27, the operation of scaling is assigned to layer B, but the movement in the z direction is usually larger as compared to that of layer A or layer C because the scaling is required to be expressed by the forward and backward movements. Therefore, the operation can be facilitated by furthermore thickening layer B.

The layers as explained above can be used in a natural touch feeling of the operator by determining the interval of each layer based upon a standardized stroke, but in the present embodiment, the face 4501, the face 4502 and the like partitioning the respective layers are stereoscopically displayed in positions set appropriately as similar to the virtual operation screen 701, and thereby the operator can certainly recognize the boundary between the layers. Alternatively, any or all of layers A, B and C are stereoscopically displayed with gradation corresponding to a depth of the layer, and thereby the operator can recognize the existence and the depth of the layer, and further, the layer can be more effectively expressed by any of the display methods known in the present technological field.

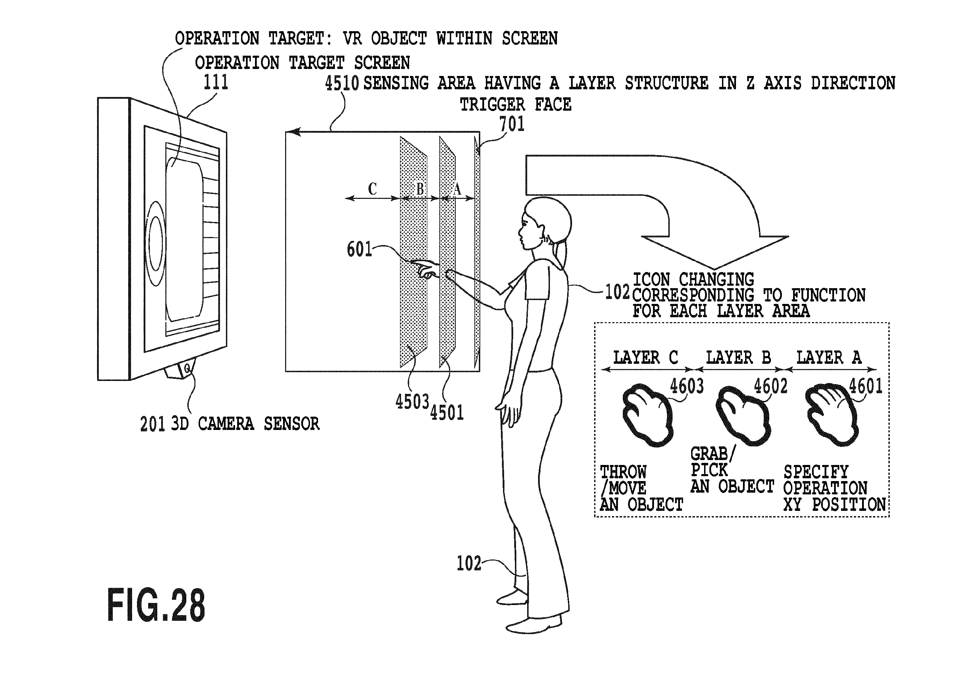

Fig. 28 is a diagram showing an example of a different icon in the present embodiment. In an example shown in Fig. 28, an operation for specifying an operation position on the three-dimensional display device 111 is assigned to layer A, an operation for "grabbing" an object in the specified position is assigned to layer B, and an operation for throwing or moving the grabbed object is assigned to layer C. It should be noted that the above icons may be used in a two-dimensional display and may be displayed stereoscopically by adjusting the icon in use for stereoscopic display.

As explained above, at the time of the determining of the operation content having been determined as the operation by the virtual operation screen, the kind of the operation can be specified in accordance with not only the movement of the hand or the finger but also the position thereof in the z direction, that is, the virtual operation layer. Therefore, as compared to the determination of the operation where in a case of specifying the operation only by the movement of the finger or the hand, it is required to prepare many various gestures and for the operator to learn them, the operator can perform complicate movements as needed only by a simple movement.

It should be noted that in the aforementioned examples, particularly in the example shown in Fig. 27, the operations for being capable of sequentially carrying out a series of movements of hands, fingers or the like between the respective layers are arranged. However, In a case of being not capable of sequentially performing the operations (example shown in Fig. 28), there occurs a problem of two points as follows. That is, (1) a hand-finger passes the other layer before the hand-finger reaches the virtual operation layer as a target and an instruction which the operator does not desire is given, and (2) in a case of pulling in the hand out of the operation region after the targeted operation is finished, the hand-finger passes the other virtual operation layer, and an instruction which the operator does not desire is given. For avoiding the above problem, for example, the following method and the like will be considered. That is, a multi-sensing state of inserting a hand opposite to a hand for an operation into an operation region (for example, in a state where, in a case where the operation is performed with a right hand, a left hand is inserted into the operation region) is set as a state of absence of an operation (or in reverse, as a state of presence of an operation). Thus it is determined whether or not the operation of each layer is performed, based upon the in and out operation of the hand opposite to the hand for the operation (in this example, the operation determination is made by the operations of both hands, but there are considered various methods such as a method for providing a passing area on an XY plane).

As the present embodiment is used as above, the operator can perform the operation of the system in response to the movement of the operator without in advance learning or arrange gestures, and further, the posture or each part of the operator, for example, the movement of the hand can be comprehended. Therefore, when the present embodiment is applied to a game using an entire body of an operator, a so-called mixed reality (MR) can be realized.

### (Second Embodiment)

The present embodiment differs in a point where the virtual operation screen stereoscopically displayed in the aforementioned first embodiment is in advance specified by the operator for setting, from the first embodiment, but is the same as the first embodiment in terms of the system construction, the process of how the movement which the operator performs to the virtual operation screen is recognized as the operation, and the like. That is, in the present embodiment, as described later, in a case where the operator performs an operation, first, where to set the virtual operation screen is instructed by a constant operation and the virtual operation screen is formed according to the instruction. Therefore, since the operator can in advance recognize where and what operation screen exists without stereoscopically displaying the virtual operation screen by the three-dimensional display device as in the case of the system in the first embodiment, it is not necessarily required to stereoscopically display the virtual operation screen, and the regular two-dimensional display device can be used. However, for furthermore securing the recognition of the virtual operation screen, the virtual operation screen may be stereoscopically displayed also by using the three-dimensional display device. As described above, since the process after forming the virtual operation screen in response to the instruction of the operator in the present embodiment is basically the same as in the first embodiment, hereinafter the setting process of the virtual operation screen will be primarily explained.

### (Setting of Virtual Operation Screen)

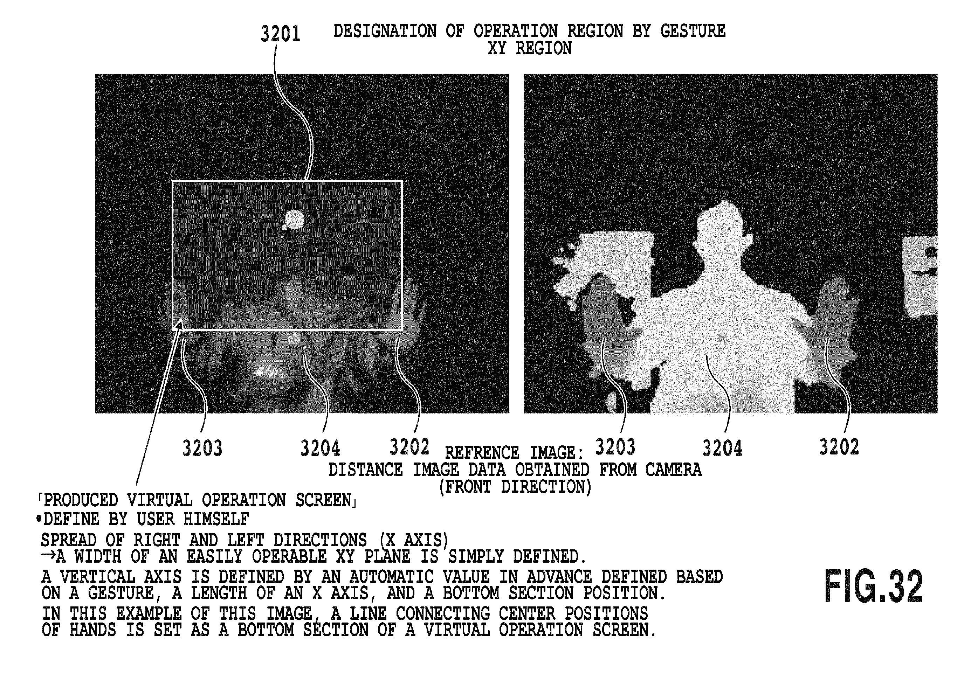

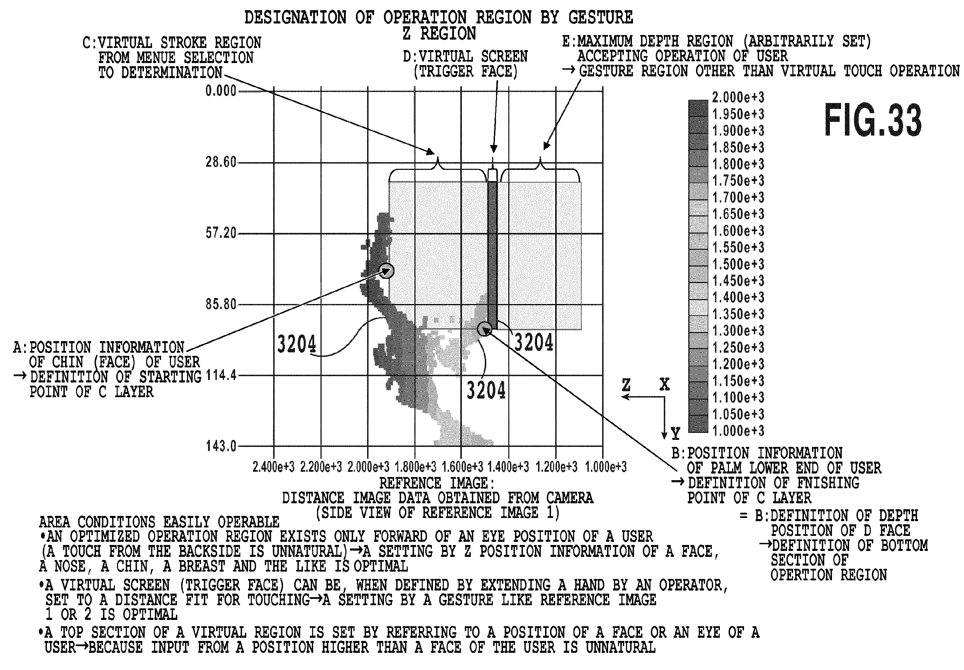

Fig. 32 are diagrams each showing an image photographed for determining a region for setting a position of an operation screen from a gesture of an operator according to the present embodiment. As in an example shown in Fig. 32, a configuration of the operation screen (including a size and an angle to the display device) is determined by hands 3202 and 3203 of the operator in the image 3201 photographed by the three-dimensional camera 201, and a position of the virtual operation screen 3201 is determined from a distance to the hands 3202 and 3203 from the display of a distance data image 3211in the z direction and a distance to a body 3204 from the display. Concretely, the depth can be comprehended from image data of the operator photographed by the three-dimensional camera 201. Fig. 33 is a diagram explaining extraction of a position in a pointed operation screen according to the present embodiment and shows an image of the operator in the depth direction (z direction). By referring to Fig. 33, it is understood that the operation screen 3201 should be formed in a position which the operator indicates with the hand 3202.

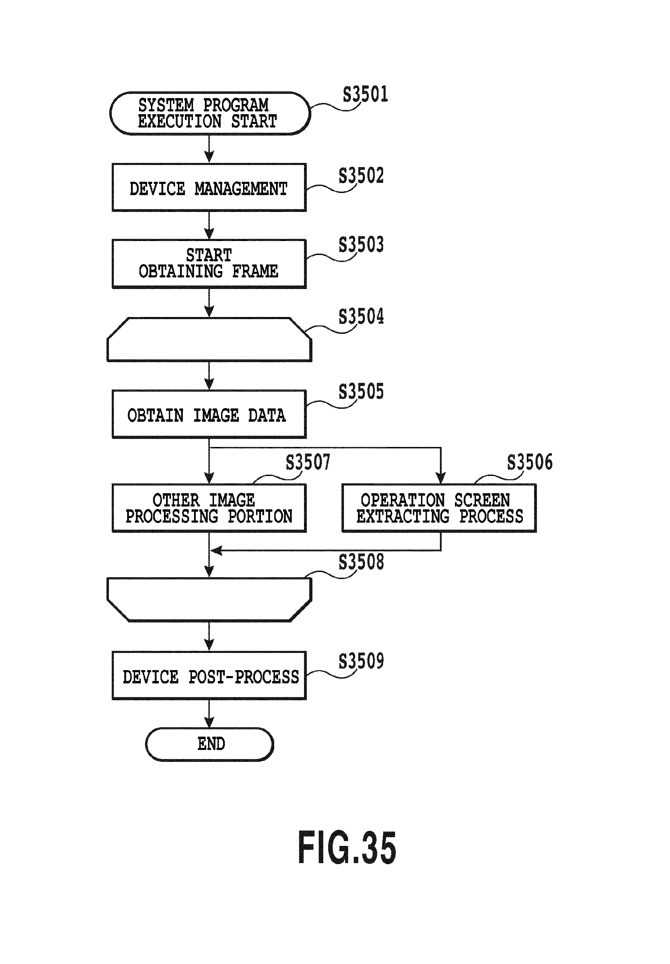

In the present embodiment, this setting process of the virtual operation screen starts after power input of the system or by a particular operation, for example, by an instruction of a remote controller, but is not limited thereto, and may start by any of methods or timings known in the present technological field. Fig. 35 is a flow chart showing the process for setting a position of an operation screen by a gesture of an operator according to the present embodiment. Here, as shown in Fig. 7, in a case of a plurality of operation candidates explained in the aforementioned first embodiment, a person for setting a virtual operation screen may be determined as an operator, and the virtual operation screen set at this time is used by the determined operator. As a result, when the virtual operation screen to be explained in the present embodiment is set, by displaying icons or boxes of operators as shown in Fig. 41 and Fig. 42 on a screen, operator candidates including the determined operator can recognize who is the operator, thus preventing an erroneous operation.

First, a system program starts by power input thereto (S3501), and a device management of various settings of devices used in the system is executed (S3502). Herein a frame obtaining process of a virtual operation screen starts (S3503), and the system is in a state of waiting for instruction input from an operator (S3504). When the instruction is inputted to obtain image data (S3505), after an operation screen extracting process to be described later is executed (S3506), a device post-process is executed and the setting of the virtual operation screen ends (S3509).

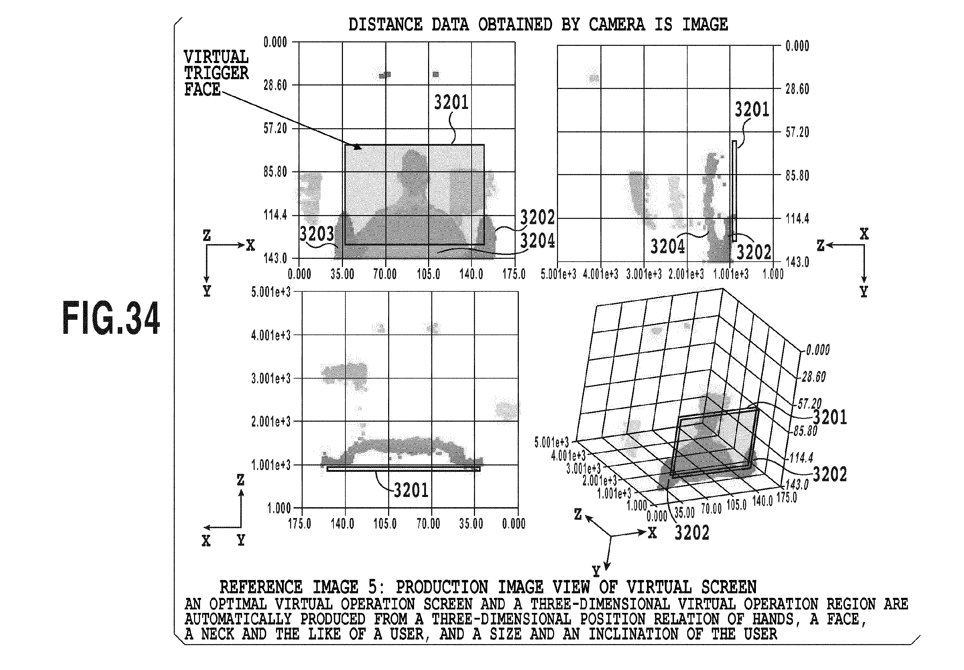

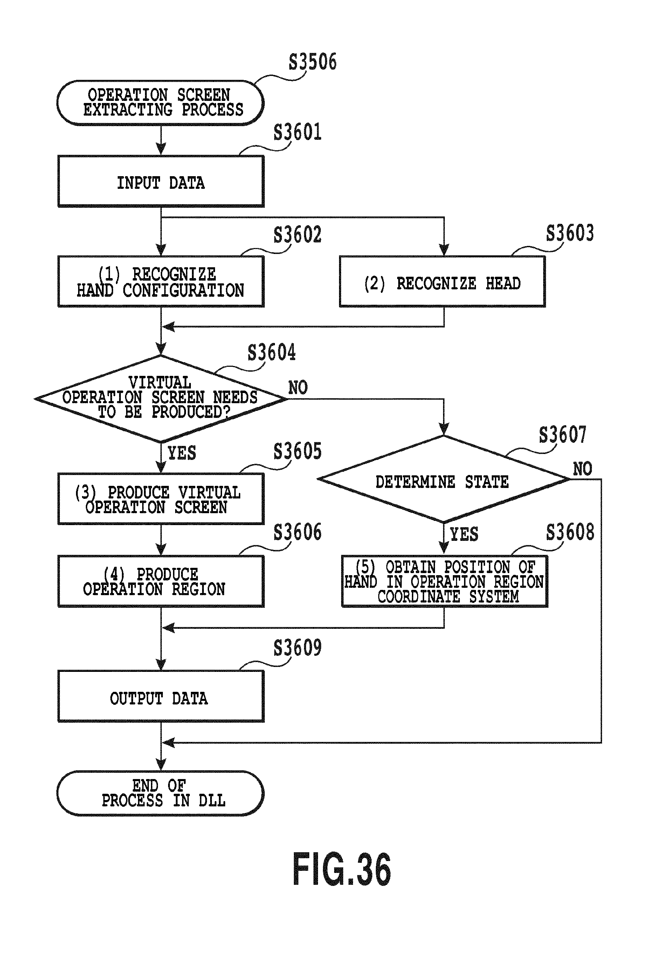

Next, by referring to Fig. 34 and Fig. 36, the operation screen extracting process will be explained. Fig. 34 are diagrams showing distance data images obtained from a camera for extracting a position of a pointed operation screen according to the present embodiment, and Fig. 36 is a flow chart showing the process for extracting the position of the pointed operation screen according to the present embodiment. First, when data, that is, stereoscopic image data of an operator is inputted (S3601), a configuration of a hand and a head of the operator are recognized (S3602, S3603) to determine whether or not a virtual operation screen is formed (S3604). Concretely, for example, when the hand maintains a given, predetermined gesture for a constant time, it is determined that it points out the setting process of a virtual operation screen, a virtual operation screen of the configuration including a position and a size pointed out by the hand of the operator is extracted from the distance data image as shown in Fig. 34 to form the virtual operation screen (S3605), and an operation region is set based upon a measurement value of a body of the operator, for example, a length of an arm and a position of a body or a head (S3606) to output the data, thus ending the process (S3609). Here, in the present embodiment, it is determined that the setting instruction of the virtual operation screen is made by stopping the movement of the hand and the like for a constant time, but the setting instruction is not limited thereto, and the setting instruction may be determined by any of the methods known in the present technological field, such as various gestures and an instruction by a remote controller operation. It should be noted that in the present embodiment, the virtual operation screen is basically formed in the configuration and the position shaped by the hand, but may be adjusted in accordance with the body feature of the operator, the position and the use state of the display device, and the like.

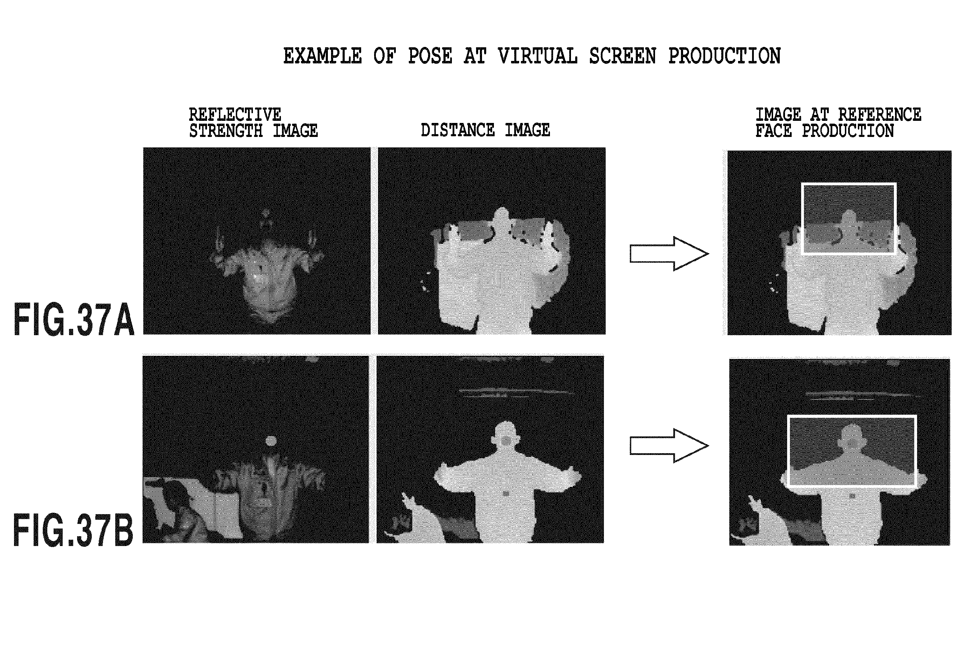

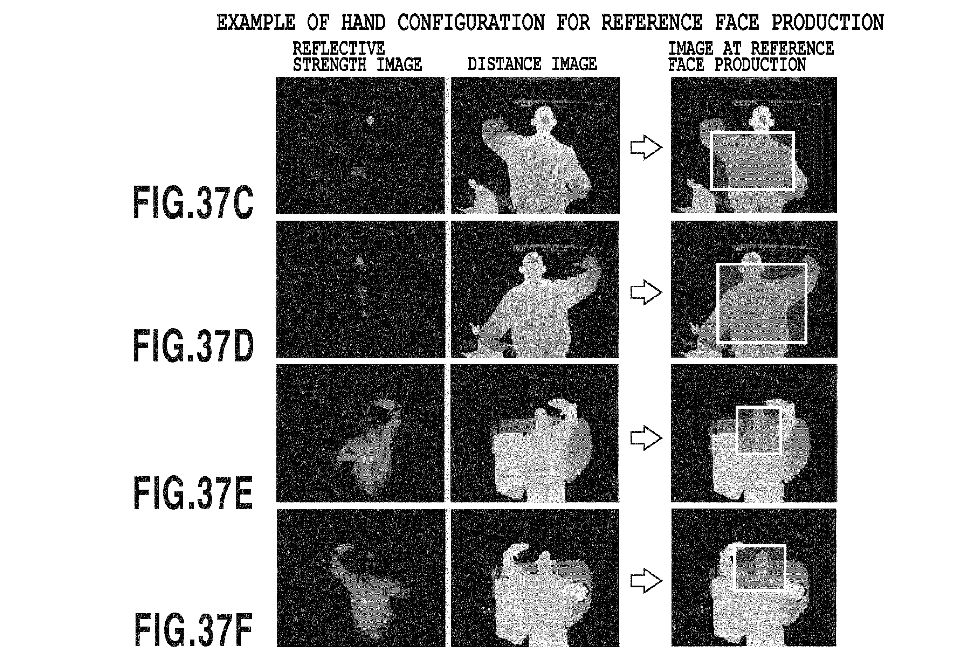

When it is determined that the movement does not point out the setting process of the virtual operation screen from the recognition of the head or the gesture of the hand, it is determined whether or not the virtual operation screen is in a state of being already set (S3607). In a case where the virtual operation screen is set, the position of the hand within the operation region is obtained based upon determination of a regular operation (S3608). As described above, the setting process of the virtual operation screen based upon the instruction of the operator is executed, but in the present embodiment, since the operator instructs the virtual operation screen by himself, the recognition of the virtual operation screen can be made without separately showing the position of the virtual operation screen to the operator with some different method. It should be noted that since various gestures can be considered as the gesture instructing the configuration and the position of the virtual operation screen by using ordinary knowledge in the present technological field, any of them can be used in the present embodiment. Examples of such variations will be shown in Fig. 37A to Fig. 37F.

### (Operation Support On This Side of Virtual Operation Screen)

The present embodiment is designed such that an operator performs an operation on a basis of a virtual operation screen stereoscopically displayed virtually on a space as if an input device such as a touch panel existed therein, thus certainly determining the operation content. However, particularly in a case of not stereoscopically displaying the virtual operation screen, which is different from the case of the aforementioned first embodiment, the operation support is made until a hand or a finger as a part of the operator reaches the virtual operation screen, that is, in a period from a point where the operator starts to move a hand or a finger for execution of some operation to a point where the operator presses down the virtual operation screen, and thereby, the operation input can be performed more easily and more accurately.

Basically this principle of the operation support is designed such that by visually displaying on the three-dimensional display device 111 what kind of operation the operator will perform in accordance with movements of positions in portions of the operator, for example, a hand or a finger, the operator is guided to enable the accurate operation input.

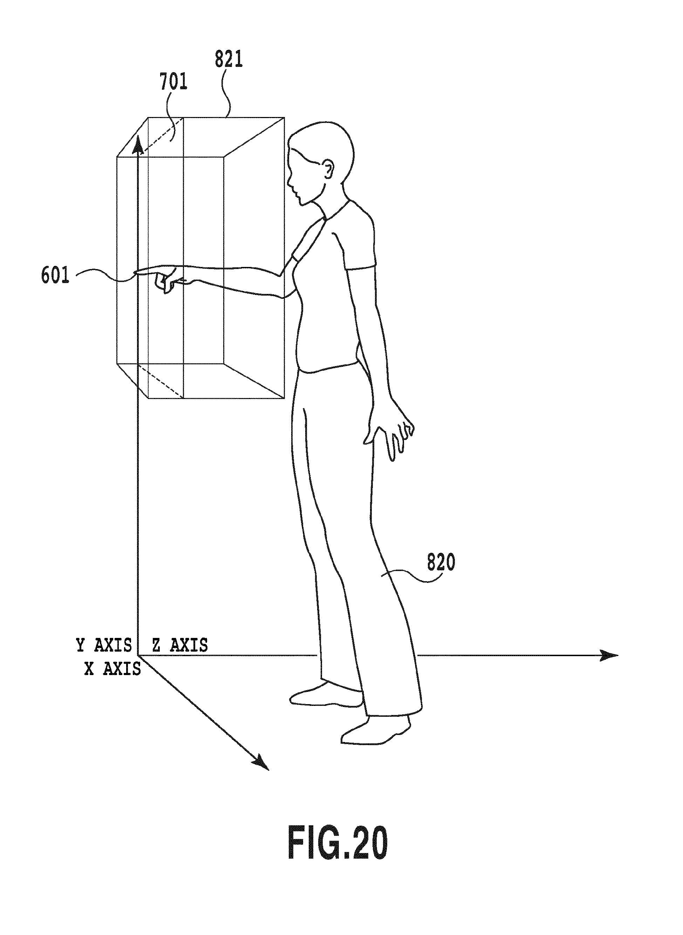

As this respect is explained with reference to Fig. 20 and Fig. 12, in the present embodiment, in a case where the operator can in advance perform an operation in a constant standing position, the virtual operation screen 701 is stereoscopically displayed in a position suitable for an operation to the virtual operation screen at the standing position in advance set or in an appropriate position as needed in accordance with the standing position of the operator. Likewise, as shown in Fig. 20, an operation region 821 suitable for the operator 820 is in advance set. As described above, by showing what kind of operation will be currently performed on the three-dimensional display device 111 with various forms, the operator can recognize his own operation.

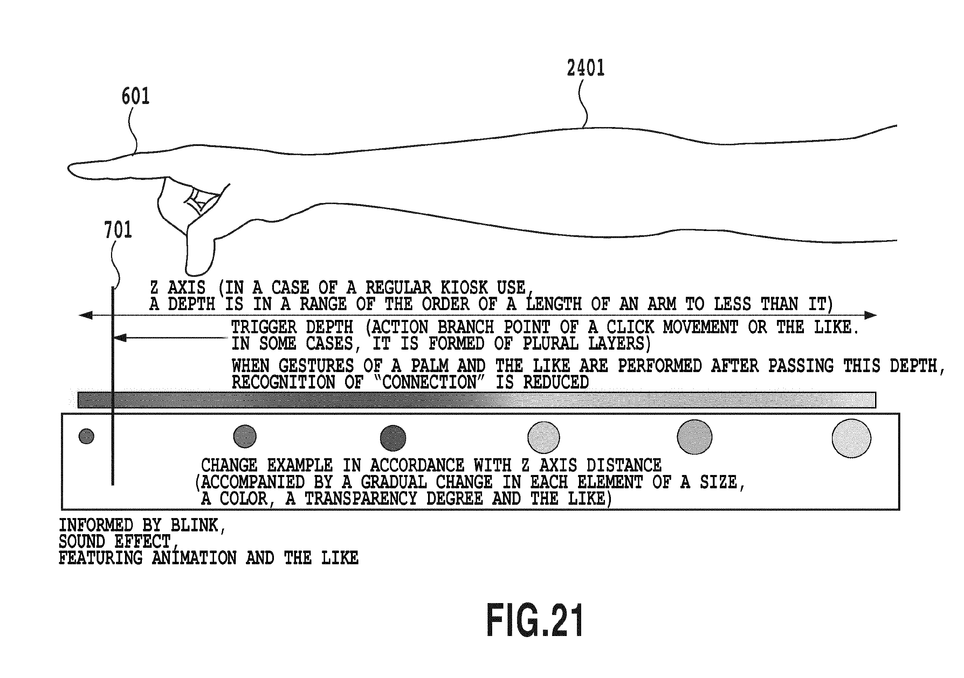

As one of these forms is explained with reference to Fig. 21, in a case where an operator performs some operation to the system, a position of a hand or a finger 601 changes by moving an arm 2401 forward and backward to the three-dimensional display device 111 in the present example. Therefore, when the state is displayed in the three-dimensional display device 111, as the protruding finger 601 reaches a constant position, a constant process as the system is executed at this time, for example, the item instructed on a screen of the three-dimensional display device 111 is executed. In the example in Fig. 21, a size of the icon changes depending on a position (depth) of the finger 601 to the virtual operation screen 701, and as the finger 601 approaches the virtual operation screen, the icon becomes the smaller, and therefore, the operator can recognize that the finger is focused on a constant spot by his own operation. In a position where the icon is changed to the smallest, the operation is fixed and the process corresponding to it is executed.

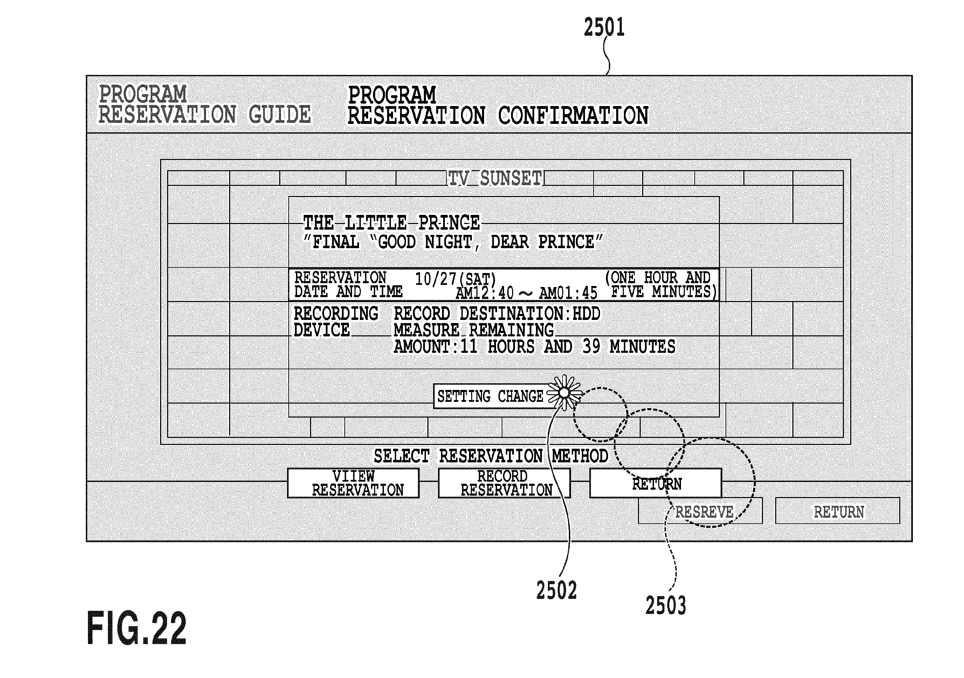

As a result of the above operation, Fig. 22 shows how the icon changes on a screen 2501 of the three-dimensional display device 111. By referring to Fig. 22, for example, a television program table is stereoscopically displayed on the screen 2501 of the three-dimensional display device 111, wherein an operation in regard to some program will be performed. In this state, for example, when an operator selects a menu button of "Setting Change", the operator extends the finger 601 toward the three-dimensional display device 111 as described above to select the menu button. In the present embodiment, when the finger 601 approaches the television program table as the virtual operation screen by a given distance, an icon 2503 is displayed on the screen 2501. In regard to icons, since the position of the finger is still at a distance, a relative large icon in the right side among icons shown in Fig. 22 is displayed. When the operator further extends his arm 2401, this icon approaches "Setting Change" of a selection item as a target to be smaller, and becomes a particular icon at the time of an icon 2502 having a constant size. When the finger crosses the virtual operation screen, it is determined that the item of the pointed position is selected. Here, the television program table is stereoscopically displayed in the position of the virtual operation screen for the operator, but the icon is not necessarily displayed in the same position and may be display two-dimensionally or may be arranged in a more appropriate position by a 3D display.

In this manner, in the example in Fig. 22, by changing the size of the icon displayed on the screen 2501 according to the position of the finger 601, the operator can comprehend how his own movement is recognize in the system and the position of the virtual operation screen can be more easily recognized for the operator to perform the operation such as selection of the menu. Here, the positions and the sizes of the entire operator including the finger 601 and the arm 2401 and each portion can be extracted by using the three-dimensional camera in the same way as an entire image of the operator. In consequence, since the object within the screen can be figured out including the depth, it is possible to calculate the distance and the position relation to the virtual operation screen based upon these pieces of information. However, in regard to the three-dimensional camera used in the present embodiment, the extraction of the position, the calculation of the distance and the like, any of methods known in the present technological field can be used, and therefore, the explanation is herein omitted.

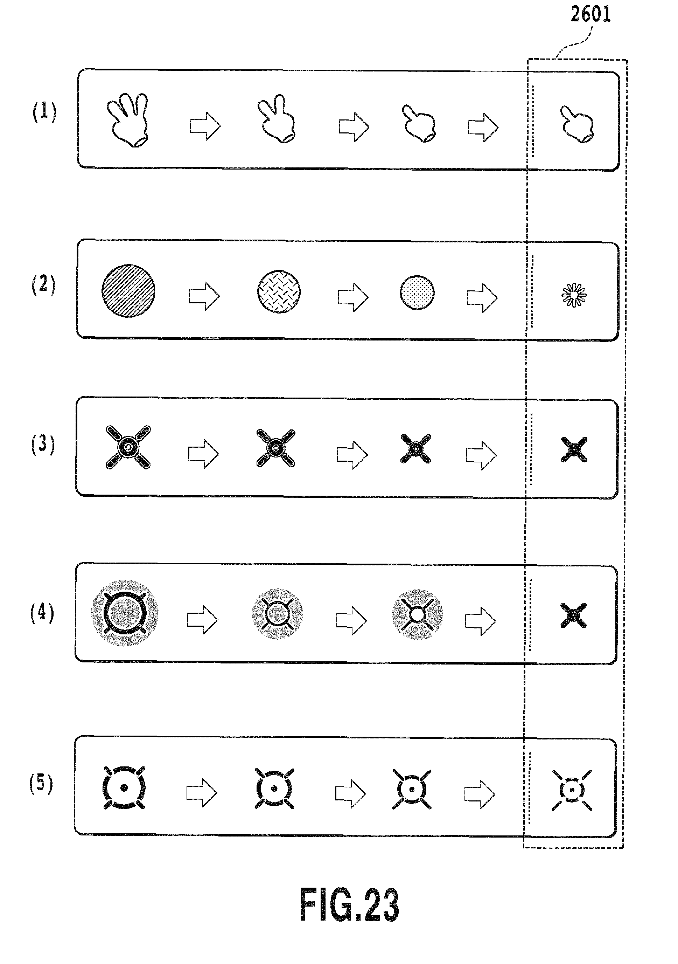

Herein the icon displayed on the screen is formed in a circular shape and changes in size in accordance with the movement of the operator, but is not limited thereto, and icons having various forms as shown in Fig. 23 can be used for various changes. That is, by referring to Fig. 23, Example (1) shows icons regarding a form of a finger, wherein the icon is smaller as the finger approaches the virtual operation screen in the same way as in the example in Fig. 22. Example (2) shows that an icon is circular and is gradually smaller, but when the input or selection is fixed, the icon changes into a particular configuration for determination of the operation. In a case of this icon or other icons, a color of the icon can be changed instead of the change of the configuration (including a size and an angle to the display device) or in agreement therewith. For example, the operator can intuitively recognize that the operation is focused and fixed by changing the color from a cold group to a warm group, such as in the order of blue, green, yellow, and red. Example (3) shows that an icon is formed in an X shape, wherein in a case where the icon is at a distance, the icon is not only large but also is shown with gradation, and as the icon is nearer, a size of the icon is smaller and is formed in a sharp shape with the gradation disappearing. Example (4) shows that there is recognized a state where an entire icon does not change in size, and a figure drawn inside it changes in configuration to be focused. In this case, a color of the figure can be also changed. Example (5) shown in Fig. 23 also shows an example of changing a configuration of an icon. In Fig. 23, a configuration and a color of the icon change in response to the movement of the finger, and by changing it into various configurations or colors or repeatedly turning on and off the icon as shown in column 2601 in a moment when the finger is over the virtual operation screen, the operator may recognize that the movement is determined as the operation. In addition, although not shown, in regard to other changes of the icon, a change that at first, the icon is transparent and becomes less transparent as the finger is closer to the virtual operation screen is also effective. Further, although not shown, as the focus of an icon is advanced using a stereoscopic display function of the three-dimensional display device, an image which looks like the icon protruding from the screen can be produced, thus let the operator know a situation of the focus.

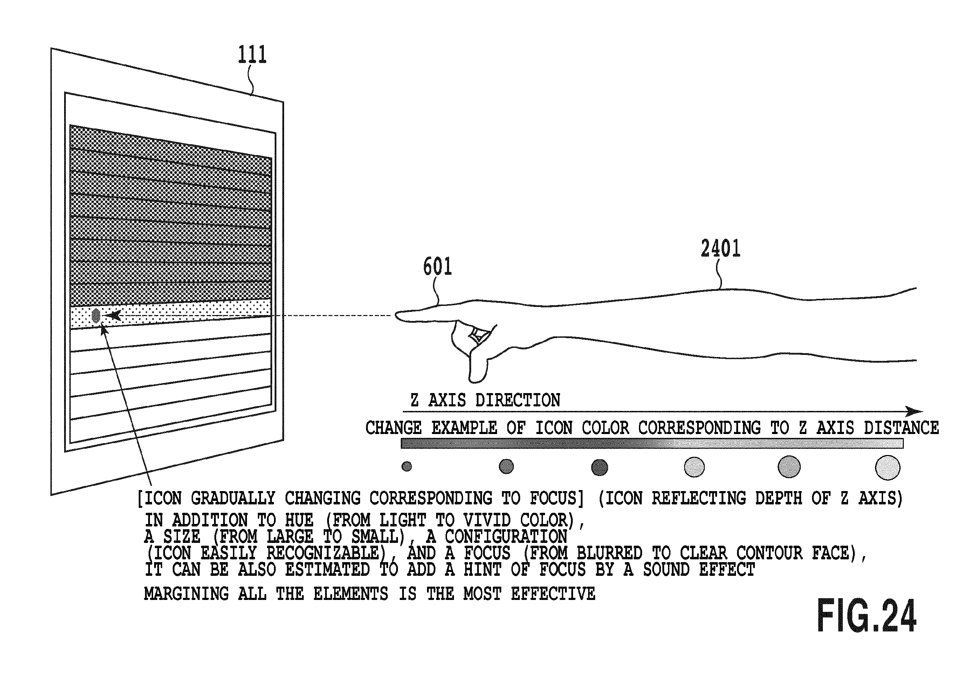

Here, among variations of the icon, particularly in a case of changing a color or a density of an icon without changing a configuration thereof so much, as the finger 601 is closer without moving the icon so much as shown in Fig. 24, the color of the icon becomes a color in a warm color group or dense, thus making it possible to fix the input.

In addition, in the example as described above, for confirming the determination situation of the operation, the icon is displayed in the position of the virtual operation screen and the color or the configuration of the icon is changed in accordance with the movement of the operator, but, for example, in a case where the position to be pointed is in advance fixed from the beginning as in the case of the menu, without bothering to display the icon, the operation is determined based upon which item button of the stereoscopically displayed menu the position pointed out by the finger is the closest to, wherein by changing a color or a density for filling the pointed item button in accordance with the movement of the finger, particularly a distance from the virtual operation screen, the position of the virtual operation screen is more easily comprehended, making it possible to facilitate the operation input.

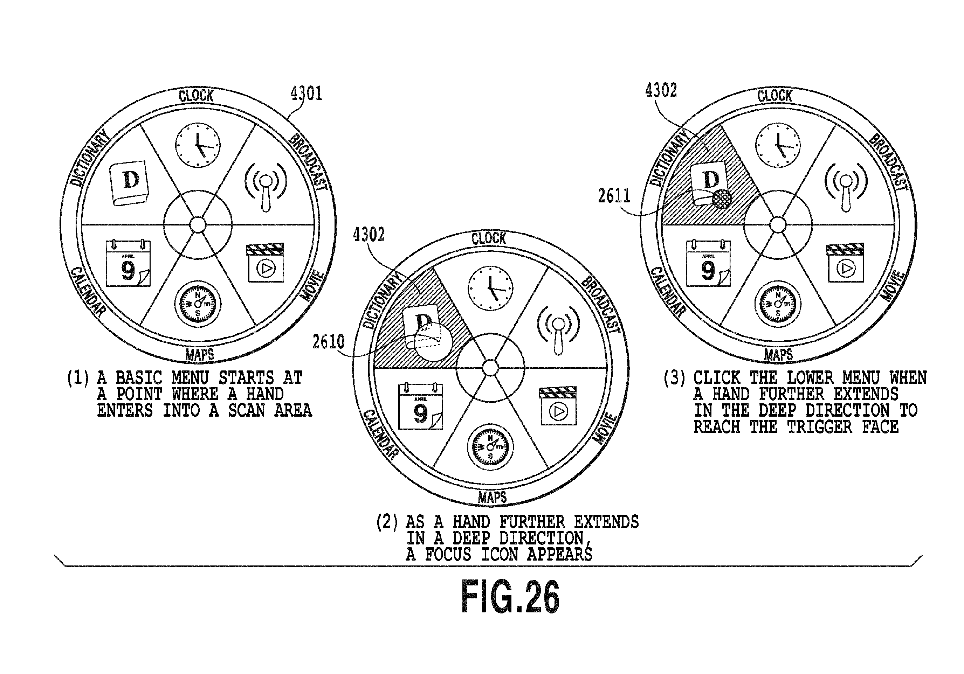

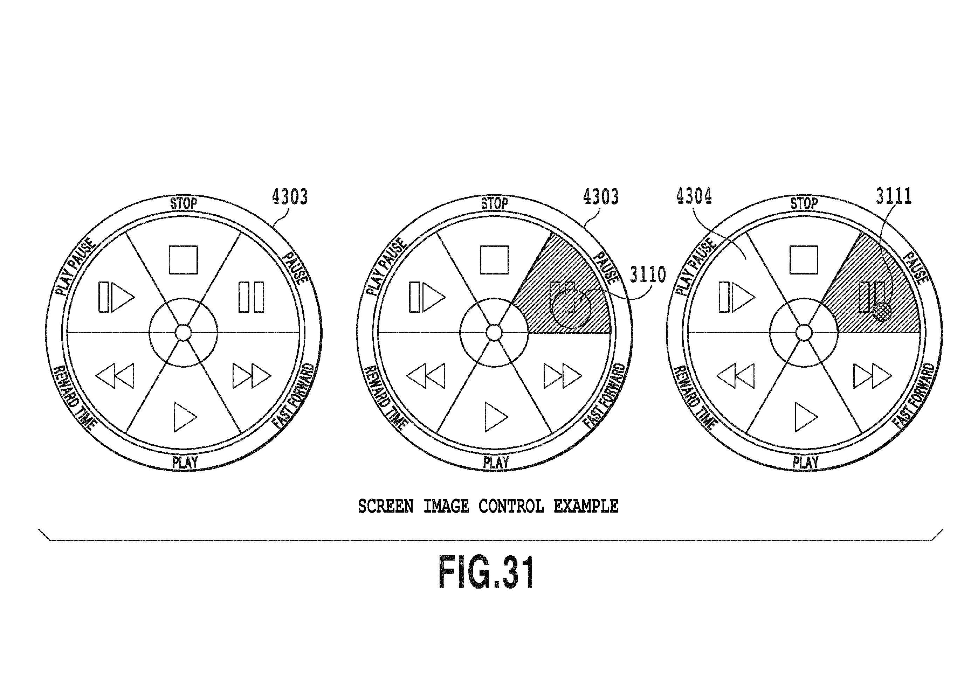

As a selection example of the similar menu, there is an example as shown in Fig. 26, which therefore will be explained. For example, as the finger 601 in Fig. 21 enters into a constant region on this side of the virtual operation screen 701, a menu 4301 is stereoscopically displayed in a position of the virtual operation screen on the screen and when the finger 601 is closer to the virtual operation screen 701, a large icon 2601 is displayed on an item 4302 of the menu shown in Fig. 26, for example. Thereafter, when the finger 601 reaches to the virtual operation screen 701, the selection of the item 4302 is fixed and a small icon 2611 is displayed, thereby notifying the selection fixation. Thereafter, by moving the finger 601 right, left, upward or downward, when the selection item of the menu moves and stops in a desired item for a constant time, the process in agreement with the selected item can be executed. In addition, when the finger 601 is moved backward of a constant region on this side from the virtual operation screen 701 before the selection is performed, the menu can be deleted. Fig. 31 also stereoscopically displays the menu in a position of the virtual operation screen when the finger 601 enters into a constant region on this side of the virtual operation screen 701 in the same way as in Fig. 26, which is herein an example of video screen image control. In this example, in the same way as the example in Fig. 26, an operation of the menu is possible by a large icon 3110 and a small icon 3111.

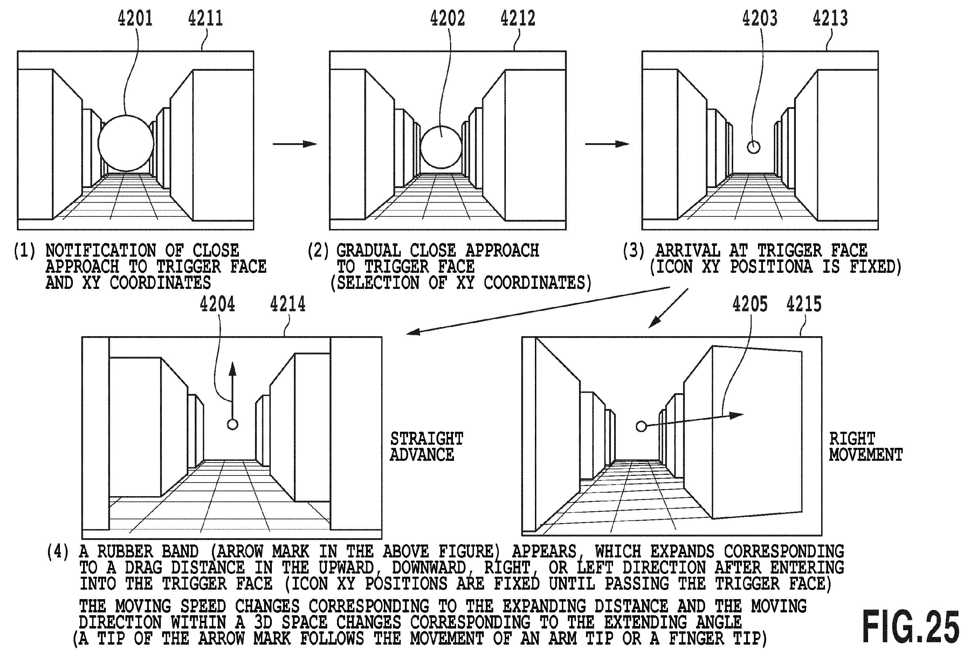

Further, an example of a different input operation will be explained with reference to Fig. 25. Fig. 25 is diagrams each showing a display screen of an example of inputting an instruction for moving a figure displayed on a screen by the present embodiment. Herein the display screen is stereoscopically displayed in a position of the virtual operation screen, and the instruction is made by touching a hand or a finger of the operator on the virtual operation screen and moving it. First, as the finger and the like are closer to the screen, an icon 4201 on a screen 4211 is changed to an icon 4202 on a screen 4212 to reduce the icon, which shows that the finger is approaching the virtual operation screen. Thereafter, when the finger touches the virtual operation screen, the icon is changed in color as in the case of an icon 4203 on a screen 4213 to be left therein. In that state, when the finger and the like move upwards, a rubber band 4204 on a screen 4214 is displayed to show the movement direction, and thereby the operator can confirm his own operation. In addition, when the finger moves in the right direction, a rubber band 4205 on a screen 4215 can be displayed. The rubber band (arrow mark in the above figure) expanding in accordance with a drag distance of the finger in the upward, downward, right or left direction after the finger reaches the virtual operation screen appears (position of the icon 4203 is fixed until the finger is out of the virtual operation screen), and the moving speed can be changed in accordance with the expanding distance and a moving direction of the icon within a 3D space can be changed in accordance with an expanding angle (tip end of the arrow mark follows the movement of the arm front or finger front).

As described above, in a case where the operator is positioned in the substantially same height with the monitor as shown in Fig. 20, that is, in a case where the virtual operation screen is formed to be substantially perpendicular to the front face of the operator in the horizontal direction, the principle of the present embodiment is explained, but this principle is not affected by the position relation between the operator and the display device or the configuration of the display device, and various arrangements or various constructions of the display device are possible. For example, the principle can be applied to the arrangement of the system as shown in each of Fig. 13 to Fig. 15. In this case, since the three-dimensional camera 201 and the three-dimensional display device 111 both are inclined, the arrangement does not basically have a large difference from the aforementioned arrangement in the horizontal direction, but even if the camera is installed in a different position, the position correction is made by any of the methods known in the present technological field, and thereby the position relation between the portion of the operator and the virtual operation screen can be calculated to determine the operation.

As described above, since the present embodiment is adapted to set the virtual operation screen itself with an intention of an operator before processing the operation input based upon the virtual operation screen explained in the first embodiment, the setting process only is explained, but once the virtual operation screen is set, even if combined with any of the functions in the first embodiment, the operation input process can be executed.

### (Third Embodiment)

The present embodiment can be basically used in common with the first embodiment and the second embodiment, and is therefore similar in terms of the system construction and the process of setting the virtual operation screen and the like, but has an improvement on the determination process of the operation. That is, the present embodiment basically has the process similar to that of each of the first embodiment and the second embodiment, but is adapted in such a manner that, for example, at the time of selecting an icon by using a virtual operation screen, particularly when a pressing direction of a finger is made by mistake in a case of a small icon, since there is a possibility that the icon can not be appropriately pointed out or a different icon is pointed out, a grid is set around the icon to cause grid snapping, thus more easily pointing out the desired icon. In a case where as in the case of the present invention, the operation screen is virtually set which is used as a reference of the operation, even if the various processes for ascertaining the recognition of the operation screen are provided as in the case of the first and the second embodiment, the operator can not always point out the accurate position. In the present embodiment, in a case where the operator points out an icon in a more or less erroneous position or direction, for example, in a case of the example as shown in Fig. 15, a desired icon can be accurately selected even if the inclination or the position of the operation screen is not adjusted.

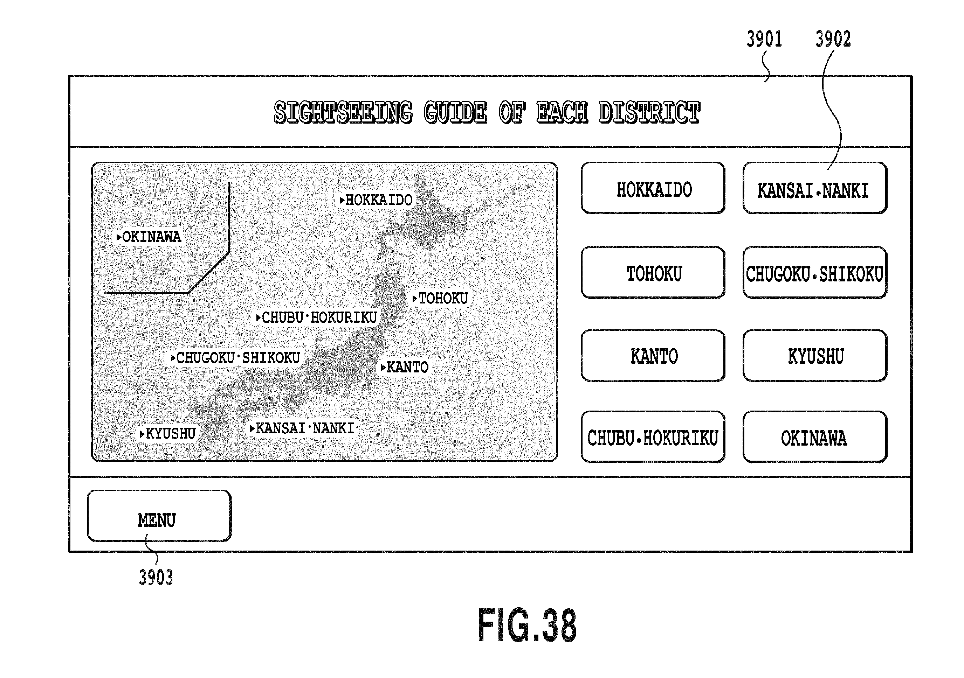

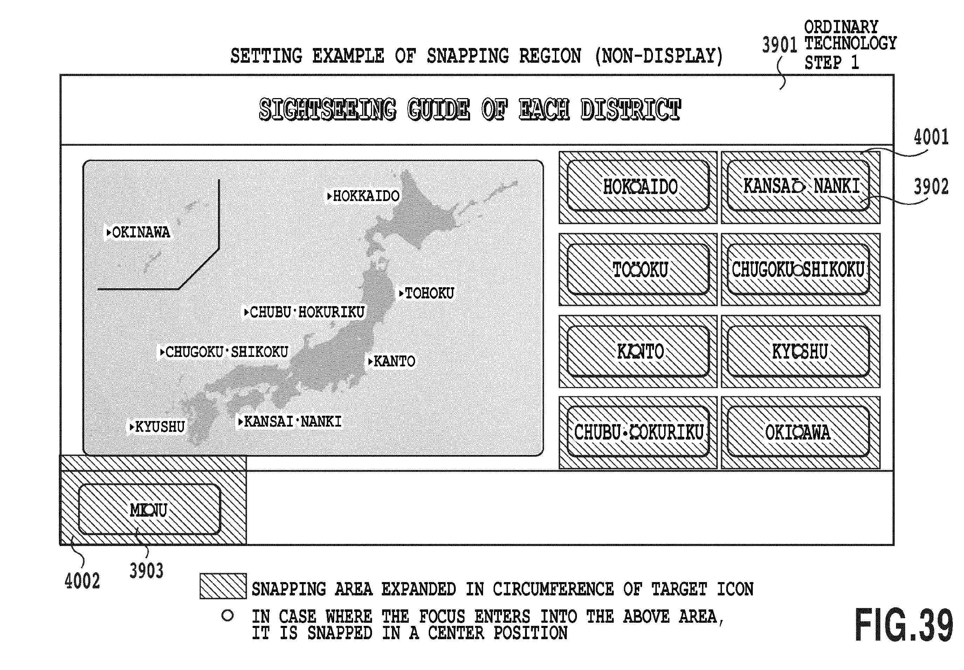

Fig. 38 is a diagram showing an example of a target screen used in the grid snapping process according to the present embodiment. Fig. 39 is a diagram showing a setting example of grids used in the grid snapping process according to the present embodiment. As shown in Fig. 39, for example, a grid 4001 is set larger than each icon to surround an icon 3902. Therefore, even in a case where an operator tries to press the icon 3902 but does not accurately press the icon 3902, if the finger enters into the range of the grid 4001 surrounding the icon 3902, the grid snapping can be caused to determine that the icon 3902 is pointed out. Further, by adjusting a division position between the grids or the like, when pointed out between the icons, it can be determined that the icon which is the closest to the pointed position is pointed out.

Concretely, the focus is snapped to a center position of the icon or the link on an operation target display device toward a target (icon or link) center from the circumference of a constant area by means of an exclusive browser, a content production tool or the like. In consequence, the selection operation can be facilitated, and even if the virtual operation screen is inclined, no problem occurs in a plane pointing movement of the operator. After obtaining stability of the focus movement on the XY plane in some degrees by the above process, in a case where a pressing stroke (touch operation to the touch panel in the air) in the Z axis direction is performed from the virtual operation screen, the guide continues to be made in such a manner that the focus is not shifted from the target (fixing the XY focus) also after the pressing movement, only the pressing stroke in the Z direction is determined, that is, even if the finger is out of the icon region by the pressing from the virtual operation screen, only the pressing is recognized to ignore the movement of the finger on the XY plane, and a series of touch strokes after that are processed as stable ones.

In addition, as to the correction other than the above, in a case where a mount position or an angle of the camera or the like is very different from that of the operation target display device, the grid snapping can be more effective by expanding and enlarging the snapping area defined arbitrarily on the XY plane, in the depth direction of the Z axis (area corresponding to an angle amount of "shift" due to a difference in the mount angle of the camera or display device).

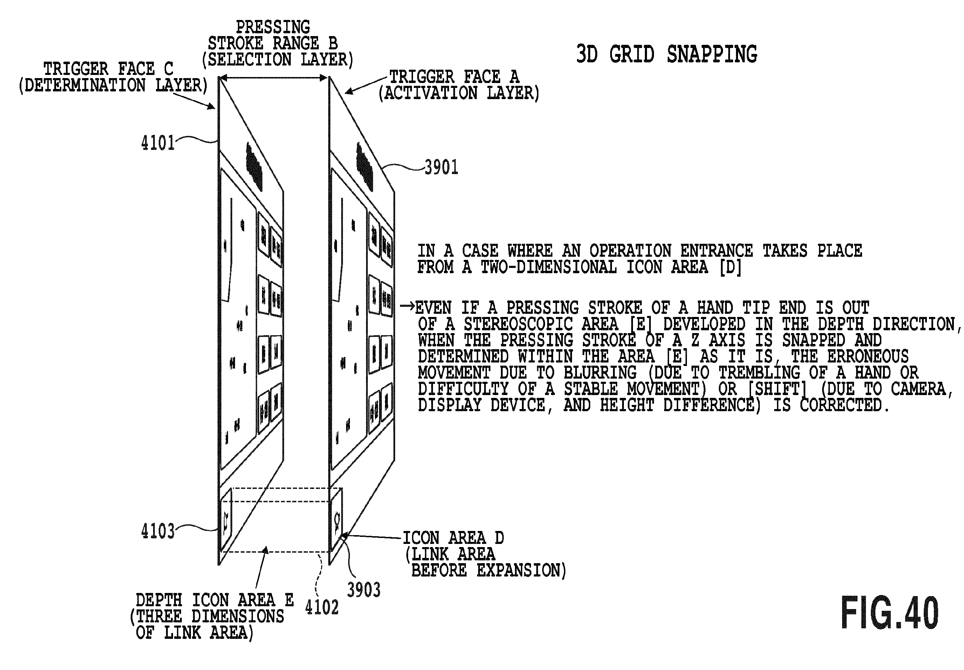

By referring to Fig. 40, in a case where the operation entrance is made from a two-dimensional icon area "D", even in a case where a pressing stroke of a tip end of a hand is deviated, the erroneous movement due to blurring (due to trembling of a hand or difficulty of stable movement) or "shift" (due to camera, display device, and height difference) can be prevented by making the snapping determination of the pressing stroke of the Z axis within the area "E" as it is by a stereoscopic area "E" developed in the depth direction.

As described above, the present embodiment is constructed such that at the time of processing the operation determination based upon the virtual operation screen explained in the first and second embodiments, particularly when an icon operator performs a movement for pointing out a constant region such as an icon, in a case where an accurate pointing can not be made due to various causes, an appropriate operation is determined by the process called grid snapping. Therefore, the special grid snapping process only is explained, but the operation input process can be executed even by combining the grid snapping process with any of functions such as the process other than the above and the setting of the virtual operation screen explained in the first embodiment and the second embodiment.

## Claims

1. An image recognition apparatus comprising:
three-dimensional photography means for reading an image of an operator to produce stereoscopic image data;
operation screen forming means for forming a virtual operation screen in a configuration and a position based upon the image and the position of the operator read by the three-dimensional photography means;
operation determining means for, by reading a movement of an image of at least a part of the operator to the formed virtual operation screen by the three-dimensional photography means, determining whether or not the movement is an operation based upon a position relation between the part of the operator and the virtual operation screen; and
signal output means for outputting a predetermined signal when it is determined that the movement is the operation.

2. An image recognition apparatus according to claim 1, wherein
in a case where the three-dimensional photography means reads a plurality of operation candidates, it is determined that an operation candidate performing a predetermined particular movement is the operator.

3. An image recognition apparatus according to claim 1 or 2, further comprising:
operator display means for displaying a position relation between the operation candidate determined as the operator, and the present operator and the other candidate shown in the image of the plurality of the candidates read by the three-dimensional photography means.

4. An image recognition apparatus according to any of claims 1 to 3, further comprising:
a position determining face arranged in a predetermined position in a side of the operator of the virtual operation screen for determining an operation position on the virtual operation screen, wherein
the operation determining means, at the time of crossing the virtual operation screen in a series of movements in which a part of the operator moves from the position determining face to the virtual operation screen, determines an operation of the operator as a movement that the part of the operator crosses a position on the virtual operation screen corresponding to a position on the position determining face which the part of the operator crosses.

5. An image recognition apparatus according to any of claims 1 to 4, wherein
positions of an arm and a face of the operator are extracted from the read image of the operator, and
a configuration and a position of the virtual operation screen are determined based upon the extracted positions of the arm and the face.

6. An image recognition apparatus according to any of claims 1 to 5, wherein
the position of the virtual operation screen is between the operator and the three-dimensional photography means.

7. An image recognition apparatus according to any of claims 1 to 6, wherein
the operation screen forming means forms the virtual operation screen in a configuration and a position defined based upon the image of the operator and a predetermined particular movement of the operator which are read by the three-dimensional photography means.

8. An image recognition apparatus according to any of claims 1 to 7, wherein
the operation screen forming means forms the virtual operation screen at an angle defined based upon the image of the operator and a predetermined particular movement of the operator which are read by the three-dimensional photography means.

9. An image recognition apparatus according to any of claims 1 to 7, wherein
the operation screen forming means forms the virtual operation screen at an angle defined based upon the image and the position of the operator read by the three-dimensional photography means.

10. An image recognition apparatus according to any of claims 1 to 9, further comprising:
operation screen stereoscopic display means for displaying a stereoscopic image showing the formed virtual operation screen.

11. An image recognition apparatus according to claim 10, wherein
the stereoscopic image is formed by a binocular parallax.

12. An image recognition apparatus according to claim 10 or 11, wherein
a distance between the part of the operator and the virtual operation screen is calculated from the position relation therebetween to stereoscopically display a predetermined index showing the position relation of the part of the operator to the virtual operation screen at a position corresponding to the distance.

13. An image recognition apparatus comprising:
three-dimensional photography means for reading an image of an operator to produce stereoscopic image data;
operation screen forming means for forming a virtual operation screen in a configuration and a position based upon a predetermined particular movement of the operator read by the three-dimensional photography means;
operation determining means for, by reading a movement of an image of at least a part of the operator to the formed virtual operation screen by the three-dimensional photography means, determining whether or not the movement is an operation based upon a position relation between the part of the operator and the virtual operation screen; and
signal output means for outputting a predetermined signal when it is determined that the movement is the operation.

14. An operation determining method comprising:
a three-dimensional photography step for reading an image of an operator to produce stereoscopic image data;
an operation screen forming step for forming a virtual operation screen in a configuration and a position based upon the image and the position of the operator read by the three-dimensional photography step;
an operation determining step for, by reading a movement of an image of at least a part of the operator to the formed virtual operation screen by the three-dimensional photography step, determining whether or not the movement is an operation based upon a position relation between the part of the operator and the virtual operation screen; and
a signal output step for outputting a predetermined signal when it is determined that the movement is the operation.

15. An operation determining method according to claim 14, wherein
the operation determining step, at the time of crossing the virtual operation screen in a series of movements in which a part of the operator moves from a position determining face arranged in a predetermined position in a side of the operator of the virtual operation screen for determining an operation position on the virtual operation screen to the virtual operation screen, determines an operation of the operator as a movement that the part of the operator crosses a position on the virtual operation screen corresponding to a position on the position determining face which the part of the operator crosses.

16. An operation determining method according to claim 14 or 15, further comprising:
an operation screen stereoscopic display step for displaying a stereoscopic image showing the formed virtual operation screen.

17. A program for executing an operation determining method for recognizing an image of an operator to determine an operation content by an image recognition apparatus, the operation determining method comprising:
a three-dimensional photography step for reading an image of an operator to produce stereoscopic image data;
an operation screen forming step for forming a virtual operation screen in a configuration and a position based upon the image and the position of the operator read by the three-dimensional photography step;
an operation determining step for, by reading a movement of an image of at least a part of the operator to the formed virtual operation screen by the three-dimensional photography step, determining whether or not the movement is an operation based upon a position relation between the part of the operator and the virtual operation screen; and
a signal output step for outputting a predetermined signal when it is determined that the movement is the operation.

18. A program according to claim 17, wherein
the operation determining step, at the time of crossing the virtual operation screen in a series of movements in which a part of the operator moves from a position determining face arranged in a predetermined position in a side of the operator of the virtual operation screen for determining an operation position on the virtual operation screen to the virtual operation screen, determines an operation of the operator as a movement that the part of the operator crosses a position on the virtual operation screen corresponding to a position on the position determining face which the part of the operator crosses.

19. A program according to claim 17 or 18, further comprising:
an operation screen stereoscopic display step for displaying a stereoscopic image showing the formed virtual operation screen.
